# EUROPEAN PATENT APPLICATION

(11) **EP 4 810 310 A1**
(43) Date of publication of application: **23.09.2026**
(21) Application number: 24906013.8
(22) Date of filing: 27.11.2024
(51) Int. Cl.: B60L 53/67

(54) **POWER DISTRIBUTION APPARATUS, CHARGING DEVICE, ENERGY STORAGE DEVICE, AND CHARGING SYSTEM**

(30) Priority: 19.12.2023 CN 202311762462
(71) Applicant: Huawei Digital Power Technologies Co., Ltd., Shenzhen, Guangdong 518043 (CN)
(72) Inventor: YIN, Boyuan, Shenzhen, Guangdong 518043 (CN); HAN, Xinru, Shenzhen, Guangdong 518043 (CN); DENG, Ziming, Shenzhen, Guangdong 518043 (CN); LI, Xiangsong, Shenzhen, Guangdong 518043 (CN); MA, Cheng, Shenzhen, Guangdong 518043 (CN)
(74) Representative: Isarpatent
(86) International application number: PCT/CN2024/134801
(87) International publication number: WO 2025/130528

(57) **Abstract**

Embodiments of this application provide a power distribution apparatus, a charging device, an energy storage device, and a charging system. The power distribution apparatus includes at least one power distribution unit, and each power distribution unit includes at least one power supply port, a plurality of load ports, at least one connection port, and a switch matrix. Each power supply port is configured to connect to a power module in the charging device, and each load port is configured to connect to a load. The switch matrix is configured to turn off or on a connection between any two of each power supply port, each load port, and each connection port. The at least one power distribution unit of the power distribution apparatus includes a first power distribution unit, and one connection port of the first power distribution unit is configured to connect to a power distribution unit of another charging device. In embodiments of this application, output power of the load port of the power distribution apparatus can be flexibly adjusted, to meet required charging power of different loads.

## Description

This application claims priority to Chinese Patent Application No. 202311762462.2, filed with the China National Intellectual Property Administration on December 19, 2023 and entitled "POWER DISTRIBUTION APPARATUS, CHARGING DEVICE, ENERGY STORAGE DEVICE, AND CHARGING SYSTEM", which is incorporated herein by reference in its entirety.

### TECHNICAL FIELD

This application relates to the charging field, and more specifically, to a power distribution apparatus, a charging device, an energy storage device, and a charging system.

### BACKGROUND

With rapid popularization of new energy vehicles, electric vehicle charging devices used as auxiliary facilities are increasingly widely used. In current actual application, different electric vehicles usually require different charging power provided by charging devices. For example, as users have higher requirements on charging time, some electric vehicles start to develop toward ultra-fast charging vehicle models. Correspondingly, charging power that needs to be provided by charging devices is also continuously increased. For electric vehicles of common vehicle models, charging power that needs to be provided by the charging devices is low.

However, the existing charging devices output power in a fixed manner, and cannot flexibly meet required charging power of different electric vehicles.

### SUMMARY

This application provides a power distribution apparatus, a charging device including the power distribution apparatus, an energy storage device, and a charging system, to flexibly adjust output power of a load port that is of the power distribution apparatus and that is connected to a load, to meet required charging power of different loads.

According to a first aspect, a power distribution apparatus is provided, used in a charging device, where the charging device includes a power module; the power distribution apparatus includes at least one power distribution unit, and each power distribution unit includes at least one power supply port, a plurality of load ports, at least one connection port, and a switch matrix; each power supply port is configured to connect to the power module, each load port is configured to connect to a load, and any two of each power supply port, each load port, and each connection port are connected through the switch matrix; the switch matrix is configured to turn off or on a connection between any two of each power supply port, each load port, and each connection port; and the at least one power distribution unit includes a first power distribution unit, and one connection port of the first power distribution unit is configured to connect to a power distribution unit of another charging device, so that power transmission is performed between the first power distribution unit and the power distribution unit of the another charging device.

It may be understood that when the power distribution apparatus is used in the charging device, the at least one connection port of the first power distribution unit is connected to the power distribution unit of the another charging device. There may be one or more first power distribution units in the power distribution apparatus.

In this embodiment of this application, when the power distribution apparatus is used in the charging device, the first power distribution unit of the power distribution apparatus may perform power transmission with the power distribution unit of the another charging device through the disposed connection port, to implement power sharing between power modules of different charging devices. Further, in actual application, the connection port of the first power distribution unit may transmit, to the load port of the first power distribution unit, power output by the power distribution unit of the another charging device, to flexibly adjust output power of the load port, to meet required charging power of different loads.

In addition, because the first power distribution unit of the power distribution apparatus can flexibly adjust the output power of the load port through the disposed connection port, the power module in the charging device to which the power distribution apparatus belongs may be designed based on low power. This helps reduce design complexity of the charging device, reduce production costs of the charging device, and help reduce a size of the charging device.

With reference to the first aspect, in some implementations of the first aspect, the power module includes an alternating current-to-direct current AC-DC conversion apparatus, a direct current-to-direct current DC-DC conversion apparatus, and a direct current bus; the AC-DC conversion apparatus is connected to an input end of the DC-DC conversion apparatus through the direct current bus; the AC-DC conversion apparatus is configured to convert an alternating current into a first direct current, and output the first direct current to the direct current bus; the DC-DC conversion apparatus is configured to receive the first direct current through the direct current bus, convert the first direct current into a second direct current, and output the second direct current; and the power supply port is configured to connect to an output end of the DC-DC conversion apparatus, to receive the second direct current output by the DC-DC conversion apparatus.

In the foregoing technical solution, when the power distribution apparatus is used in the charging device, the first power distribution unit of the power distribution apparatus may perform power transmission with the power distribution unit of the another charging device through the disposed connection port, to implement power sharing between AC-DC conversion apparatuses in different charging devices. This helps flexibly adjust output power of the load port of the first power distribution unit, and helps implement a low power design of the AC-DC conversion apparatus in the charging device, thereby reducing the design complexity of the AC-DC conversion apparatus, reducing the production costs of the charging device, and helping reduce the size of the charging device.

With reference to the first aspect, in some implementations of the first aspect, the power distribution apparatus further includes a power sharing bus; the one connection port of the first power distribution unit is configured to connect to the power distribution unit of the another charging device through the power sharing bus; the power sharing bus is configured to connect to at least one of a photovoltaic device and an energy storage device, to aggregate direct currents output by at least one of the energy storage device and the photovoltaic device, the first power distribution unit, and the power distribution unit of the another charging device.

In the foregoing technical solution, when the power distribution apparatus is used in the charging device, the connection port of the first power distribution unit may obtain, through the power sharing bus, power output by the power distribution unit of the another charging device and the energy storage device and/or the photovoltaic device, and transmit the obtained power to the load port. This helps improve the output power of the load port, to meet required charging power of different loads, improve utilization of green resources such as photovoltaics and energy storage, and provide more abundant electric energy for the load.

In addition, if photovoltaics and energy storage are stacked on the direct current bus in the power module, the DC-DC conversion apparatus connected to a downstream of the direct current bus needs to be designed based on high power. However, in this embodiment of this application, the power output by the energy storage device and/or the photovoltaic device is directly transmitted to the load port of the first power distribution unit through the connection port of the first power distribution unit, to implement a low power design of the power module, and especially implement a low power design of the DC-DC conversion apparatus connected to the direct current bus in the power module, thereby reducing overall design complexity of the power module, reducing the production costs of the charging device, and helping reduce the size of the charging device.

With reference to the first aspect, in some implementations of the first aspect, the at least one power distribution unit further includes a second power distribution unit; and another connection port of the first power distribution unit is connected to one connection port of the second power distribution unit, so that power transmission is performed between the first power distribution unit and the second power distribution unit.

It may be understood that when the power distribution apparatus is used in the charging device, none of connection ports of the second power distribution unit is connected to the power distribution unit of the another charging device.

In the foregoing technical solution, when the power distribution apparatus is used in the charging device, the first power distribution unit can perform power transmission with the power distribution unit of the another charging device through the disposed connection port, and can also perform power transmission with the second power distribution unit included in the power distribution apparatus to which the first power distribution unit belongs through the disposed connection port. Further, in actual application, the connection port of the first power distribution unit may transmit the power output by the power distribution unit of the another charging device and the power output by the second power distribution unit of the power distribution apparatus to which the first power distribution unit belongs to the load port. This can flexibly adjust output power of the load port of the first power distribution unit to meet required charging power of different loads, and can also improve power utilization of the power module connected to the power distribution apparatus.

With reference to the first aspect, in some implementations of the first aspect, the one connection port of the first power distribution unit is connected to the another connection port of the first power distribution unit through the switch matrix; and the switch matrix is further configured to turn off or on a connection between the one connection port of the first power distribution unit and the another connection port of the first power distribution unit.

In the foregoing technical solution, when the power distribution apparatus is used in the charging device, the switch matrix is used to connect the two connection ports of the first power distribution unit, so that power transmission can be performed between the second power distribution unit connected to the two connection ports and the power distribution unit of the another charging device. In this way, even if the connection port of the second power distribution unit is not connected to the power distribution unit of the another charging device, the connection port of the second power distribution unit can receive the power output by the power distribution unit of the another charging device. Further, the output power of the load port of the second power distribution unit can be flexibly adjusted to meet required charging power of different loads, and flexibility of outputting power by the power distribution apparatus to the load can be improved.

With reference to the first aspect, in some implementations of the first aspect, a switch matrix of each power distribution unit includes a first switch unit and a second switch unit, each power supply port is connected to each connection port through the first switch unit and the second switch unit, each power supply port is connected to each load port through the first switch unit, and each connection port is connected to each load port through the second switch unit.

In the foregoing technical solution, each power supply port of the power distribution unit is connected to each load port through the first switch unit, and each connection port is connected to each load port through the second switch unit, so that the power supply port and the connection port of the power distribution unit can separately and independently perform power transmission with the load port. This helps improve flexibility of output power of each load port of the power distribution unit.

With reference to the first aspect, in some implementations of the first aspect, the switch matrix of each power distribution unit further includes a third switch unit. Two of the plurality of power supply ports of each power distribution unit are connected through the third switch unit, and/or two of the plurality of connection ports of each power distribution unit are connected through the third switch unit.

In the foregoing technical solution, two power supply ports and/or two connection ports in the power distribution unit are connected through the third switch unit, so that one power supply port can be connected to each connection port and each load port of the power distribution unit through each switch in a switch matrix connected to another power supply port, or one connection port can be connected to each power supply port and each load port of the power distribution unit through each switch in the switch matrix connected to the another connection port. Therefore, this helps improve utilization of switches in the switch matrix, reduce a quantity of switches required by the switch matrix, and reduce a size of the power distribution apparatus and reduce costs of the power distribution apparatus.

According to a second aspect, a charging device is provided. The charging device includes a power module and a power distribution apparatus. The power distribution apparatus includes at least one power distribution unit, and each power distribution unit includes at least one power supply port, a plurality of load ports, at least one connection port, and a switch matrix; each power supply port is connected to the power module, each load port is configured to connect to a load, and any two of each power supply port, each load port, and each connection port are connected through the switch matrix; the switch matrix is configured to turn off or on a connection between any two of each power supply port, each load port, and each connection port; and the at least one power distribution unit includes a first power distribution unit, and one connection port of the first power distribution unit is configured to connect to a power distribution unit of another charging device, so that power transmission is performed between the first power distribution unit and the power distribution unit of the another charging device.

With reference to the second aspect, in some implementations of the second aspect, the power module includes an alternating current-to-direct current AC-DC conversion apparatus, a direct current-to-direct current DC-DC conversion apparatus, and a direct current bus; the AC-DC conversion apparatus is connected to an input end of the DC-DC conversion apparatus through the direct current bus, and an output end of the DC-DC conversion apparatus is connected to the power supply port; the AC-DC conversion apparatus is configured to convert an alternating current into a first direct current, and output the first direct current to the direct current bus; and the DC-DC conversion apparatus is configured to receive the first direct current through the direct current bus, convert the first direct current into a second direct current, and output the second direct current to the power supply port.

According to a third aspect, an energy storage device is provided. The energy storage device includes a plurality of battery pack, a direct current-to-direct current DC-DC conversion apparatus, and a power distribution apparatus, where the power distribution apparatus includes at least one power distribution unit, and each power distribution unit includes at least one power supply port, a plurality of load ports, at least one connection port, and a switch matrix; the battery pack is connected to each power supply port through the DC-DC conversion apparatus, each load port is configured to connect to a load, and any two of each power supply port, each load port, and each connection port are connected through the switch matrix; the DC-DC conversion apparatus is configured to perform power conversion on a direct current output by the battery pack, and then output the direct current to each power supply port; or perform power conversion on a direct current output by each power supply port, and then output the direct current to the battery pack; the switch matrix is configured to turn off or on a connection between any two of each power supply port, each load port, and each connection port; and the at least one power distribution unit includes a first power distribution unit, and one connection port of the first power distribution unit is configured to connect to a power distribution unit of a charging device, so that power transmission is performed between the first power distribution unit and the power distribution unit of the charging device.

It may be understood that, in the power distribution apparatus of the energy storage device, the at least one connection port of the first power distribution unit is connected to the power distribution unit of the charging device. In the power distribution apparatus of the energy storage device, there may be one or more first power distribution units.

In the foregoing technical solution, after direct current power output by the battery pack is output through the DC-DC conversion apparatus, the direct current power can be directly transmitted to an electric vehicle through the load port in the power distribution apparatus. Therefore, the energy storage device can charge the electric vehicle independently. This can improve utilization of energy storage resources, and help reduce an amount of electricity received from a power grid when the charging device is used to charge the electric vehicle, thereby reducing charging costs of the electric vehicle.

In addition, in the power distribution apparatus of the energy storage device, the first power distribution unit may perform power transmission with the power distribution unit of the charging device through the disposed connection port, to implement power sharing between the energy storage device and the charging device. Further, in actual application, the connection port of the first power distribution unit may transmit, to the load port of the first power distribution unit, power output by the power distribution unit of the charging device, to flexibly adjust output power of the load port, to meet required charging power of different loads.

According to a fourth aspect, a photovoltaic device is provided. The photovoltaic device includes a photovoltaic module, a direct current-to-direct current DC-DC conversion apparatus, and a power distribution apparatus, where the power distribution apparatus includes at least one power distribution unit, and each power distribution unit includes at least one power supply port, a plurality of load ports, at least one connection port, and a switch matrix; the photovoltaic module is connected to each power supply port through the DC-DC conversion apparatus, each load port is configured to connect to a load, and any two of each power supply port, each load port, and each connection port are connected through the switch matrix; the DC-DC conversion apparatus is configured to perform power conversion on a direct current output by the photovoltaic module, and output the direct current to each power supply port; the switch matrix is configured to turn off or on a connection between any two of each power supply port, each load port, and each connection port; and the at least one power distribution unit includes a first power distribution unit, and one connection port of the first power distribution unit is configured to connect to a power distribution unit of a charging device, so that power transmission is performed between the first power distribution unit and the power distribution unit of the charging device.

It may be understood that, in the power distribution apparatus of the photovoltaic device, the at least one connection port of the first power distribution unit is connected to the power distribution unit of the charging device. In the power distribution apparatus of the photovoltaic device, there may be one or more first power distribution units.

In the foregoing technical solution, after direct current power output by the photovoltaic module is output through the DC-DC conversion apparatus, the direct current power can be directly transmitted to an electric vehicle through the load port in the power distribution apparatus. Therefore, the photovoltaic device can charge the electric vehicle independently. This can improve utilization of photovoltaic resources, and help reduce an amount of electricity received from a power grid when the charging device is used to charge the electric vehicle, thereby reducing charging costs of the electric vehicle.

In addition, in the power distribution apparatus of the photovoltaic device, the first power distribution unit may perform power transmission with the power distribution unit of the charging device through the disposed connection port, to implement power sharing between the photovoltaic device and the charging device. Further, in actual application, the connection port of the first power distribution unit may transmit, to the load port of the first power distribution unit, power output by the power distribution unit of the charging device, to flexibly adjust output power of the load port, to meet required charging power of different loads.

According to a fifth aspect, a charging system is provided. The charging system includes a plurality of charging devices. The charging device includes a power module and a power distribution apparatus, the power distribution apparatus includes at least one power distribution unit, and each power distribution unit includes at least one power supply port, a plurality of load ports, at least one connection port, and a switch matrix; each power supply port is connected to the power module, each load port is configured to connect to a load, and any two of each power supply port, each load port, and each connection port are connected through the switch matrix; the switch matrix is configured to turn off or on a connection between any two of each power supply port, each load port, and each connection port; and at least one power distribution unit of each charging device includes a first power distribution unit, and one connection port of a first power distribution unit of one charging device is connected to one connection port of a first power distribution unit of another charging device, so that power transmission is performed between the first power distribution unit of the one charging device and the first power distribution unit of the another charging device.

In the foregoing technical solution, the first power distribution unit of any charging device in the charging system can perform power transmission with the first power distribution unit of the another charging device through the disposed connection port, to implement power sharing between power modules of different charging devices in the charging system. Further, in actual application, the connection port of the first power distribution unit of any charging device may transmit, to the load port, power output by the first power distribution unit of the another charging device, to flexibly adjust output power of the load port, to meet required charging power of different loads.

In addition, because the first power distribution unit of any charging device can flexibly adjust the output power of the load port through the disposed connection port, the power module in any charging device may be designed based on low power. This helps reduce design complexity of the charging device, reduce production costs of the charging device, and help reduce a size of the charging device.

With reference to the fifth aspect, in some implementations of the fifth aspect, the power module includes an alternating current-to-direct current AC-DC conversion apparatus, a direct current-to-direct current DC-DC conversion apparatus, and a direct current bus; the AC-DC conversion apparatus is connected to an input end of the DC-DC conversion apparatus through the direct current bus, and an output end of the DC-DC conversion apparatus is connected to the power supply port; the AC-DC conversion apparatus is configured to convert an alternating current into a first direct current, and output the first direct current to the direct current bus; and the DC-DC conversion apparatus is configured to receive the first direct current through the direct current bus, convert the first direct current into a second direct current, and output the second direct current to the power supply port.

With reference to the fifth aspect, in some implementations of the fifth aspect, the charging system further includes at least one of an energy storage device and a photovoltaic device, and a plurality of power sharing buses. The at least one of the energy storage device and the photovoltaic device, and one connection port of each power distribution unit of each charging device are connected through one power sharing bus; and the one power sharing bus is configured to aggregate direct currents output by the at least one of the energy storage device and the photovoltaic device and each power distribution unit of each charging device.

It may be understood that, because each power distribution unit of each charging device in the charging system is connected to the power distribution unit of another charging device through the power sharing bus, each power distribution unit of each charging device in the charging system may be understood as the first power distribution unit.

In the foregoing technical solution, a connection port of any power distribution unit of any charging device in the charging system may obtain, through the power sharing bus, power output by a power distribution unit of another charging device, an energy storage device, and/or a photovoltaic device, and transmit the obtained power to the load port of any power distribution unit. This helps increase the output power of the load port of any power distribution unit, to meet required charging power of different loads, improve utilization of green resources such as photovoltaic and energy storage, and provide more abundant electric energy for the load.

For beneficial effect that is not described in detail in the second aspect to the fifth aspect, refer to the beneficial effect in the first aspect. Details are not described herein again.

### BRIEF DESCRIPTION OF DRAWINGS

FIG. 1 is a diagram of a scenario of a charging system according to an embodiment of this application;
FIG. 2 and FIG. 3 each are a diagram of a structure of a charging system shown in FIG. 1;
FIG. 4 is a diagram of a structure of a power distribution apparatus according to an embodiment of this application;
FIG. 5 is a diagram of a structure of a charging system according to an embodiment of this application;
FIG. 6 is a diagram of a structure of another charging system according to an embodiment of this application;
FIG. 7 is a diagram of a structure of a charging device according to an embodiment of this application;
FIG. 8 is a diagram of a structure of a charging device according to an embodiment of this application;
FIG. 9 is a diagram of a structure of another charging device according to an embodiment of this application;
FIG. 10 is a diagram of a structure of still another charging device according to an embodiment of this application;
FIG. 11 to FIG. 14 each are a diagram of a topology structure of a power distribution unit according to an embodiment of this application;
FIG. 15 is a diagram of a structure of an energy storage device according to an embodiment of this application;
FIG. 16A and FIG. 16B are a diagram of a structure of a photovoltaic device according to an embodiment of this application; and
FIG. 17A and FIG. 17B to FIG. 19A to FIG. 19C each are a diagram of a structure of a charging system according to an embodiment of this application.

### DESCRIPTION OF EMBODIMENTS

For ease of understanding of embodiments of this application, the following descriptions are first provided before embodiments of this application are described.

In descriptions of embodiments of this application, "connection" may be electrical connection, and the electrical connection may be understood as a manner of direct electrical connection or indirect electrical connection between two electrical elements to implement signal transmission. For example, that A is connected to B may be understood as: A is directly electrically connected to B, or may be understood as: A is indirectly electrically connected to B through one or more other electrical elements.

In embodiments of this application, the terms "first" and "second" are merely intended for a purpose of description, and shall not be understood as an indication or implication of relative importance or an implicit indication of a quantity of indicated technical features. Therefore, a feature defined by "first" or "second" may explicitly or implicitly include one or more features. In addition, in the descriptions of embodiments of this application, "a plurality of" means two or more, and "at least one" and "one or more" mean one, two, or more.

In embodiments of this application, "and/or" describes only an association relationship between associated objects and indicates that three relationships may exist. For example, A and/or B may indicate the following three cases: Only A exists, both A and B exist, and only B exists.

The following describes technical solutions of this application with reference to accompanying drawings.

First, for ease of understanding technical solutions provided in embodiments of this application, the following describes an application scenario to which embodiments of this application are applicable.

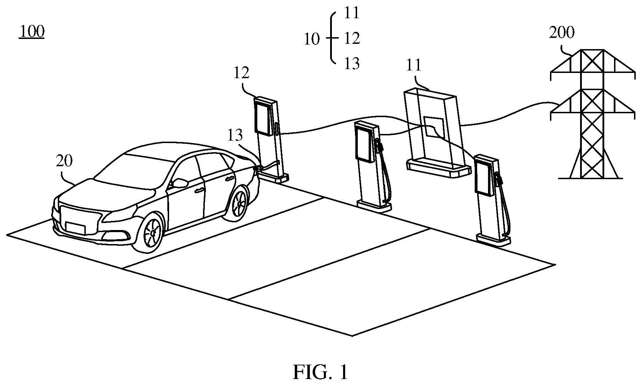

FIG. 1 is a diagram of an example structure of a charging system 100 according to an embodiment of this application.

Refer to FIG. 1. The charging system 100 may include a charging device 10 and an electric vehicle 20. The charging device 10 may be configured to receive an alternating current output by an external power grid 200, convert the alternating current into a stable direct current, and then transmit the stable direct current to the electric vehicle 20, to charge the electric vehicle 20. Alternatively, the electric vehicle 20 may reversely output electric energy to the external power grid 200 via the charging device 10.

The charging device 10 may include a charging power unit 11, at least one charging terminal 12, and at least one charging connector 13. In other words, the charging device 10 may be a split-type charging pile. The charging power unit 11 is connected to the at least one charging terminal 12, the at least one charging terminal 12 is connected to the at least one charging connector 13, and each charging connector 13 is configured to connect to the electric vehicle 20. During specific implementation, one charging terminal 12 may be connected to one or more charging connectors 13.

The charging power unit 11 may include a plurality of power conversion apparatuses. The plurality of power conversion apparatuses may convert the alternating current from the external power grid 200 into the stable direct current, and then transmit the stable direct current to the charging terminal 12. The charging terminal 12 may transmit the stable direct current to the electric vehicle 20 via the connected charging connector 13, to charge the electric vehicle 20.

The charging terminal 12 may include a housing, a human-machine interaction interface, a charging control unit, a metering and billing unit, and the like, and is configured to perform information exchange, energy transmission, metering and billing, and the like with the electric vehicle 20.

The electric vehicle 20 may be a transportation vehicle driven by electric energy to run. The electric vehicle 20 may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), a plug-in hybrid electric vehicle (plug-in hybrid electric vehicle, PHEV), or the like.

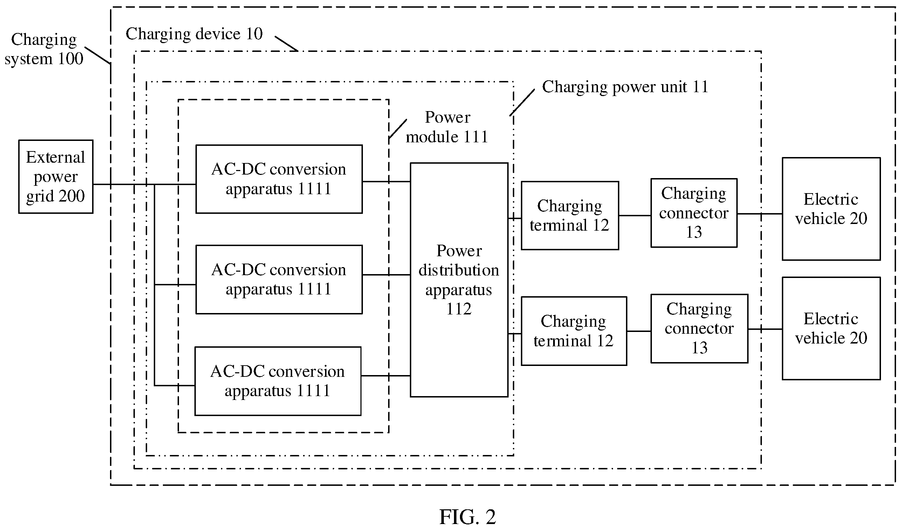

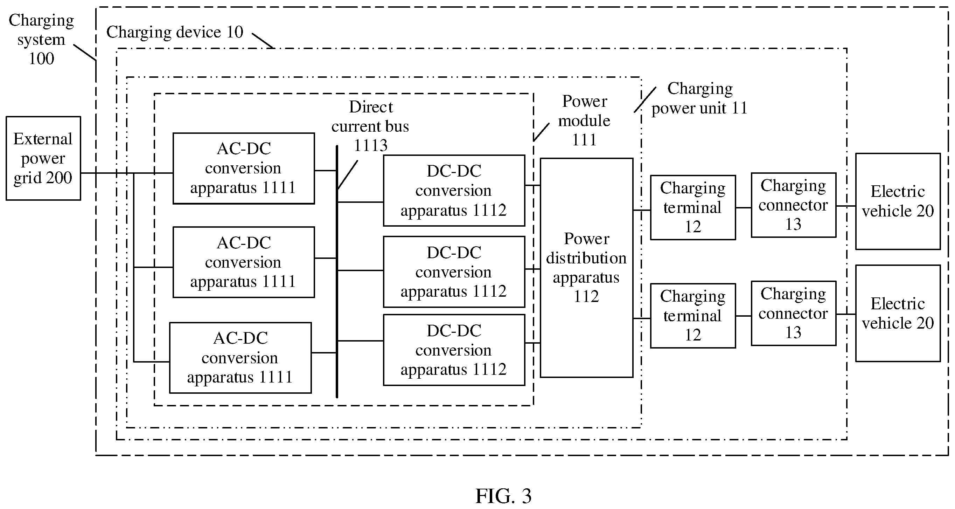

FIG. 2 and FIG. 3 are diagrams of example connection structures of the charging system 100 shown in FIG. 1.

Refer to FIG. 2 and FIG. 3. The charging power unit 11 may include a power module 111 and a power distribution apparatus 112.

In some embodiments, referring to FIG. 2, the power module 111 may include a plurality of alternating current-to-direct current (alternating current-direct current, AC-DC) conversion apparatuses 1111. Input ends of the plurality of AC-DC conversion apparatuses 1111 are connected to the external power grid 200, and output ends of the plurality of AC-DC conversion apparatuses 1111 are connected to an input end of the power distribution apparatus 112. An output end of the power distribution apparatus 112 is connected to the charging connector 13 through the charging terminal 12.

The plurality of AC-DC conversion apparatuses 1111 are configured to receive an alternating current from the external power grid 200, convert the alternating current into a direct current applicable to the electric vehicle 20, and transmit the direct current to the power distribution apparatus 112. The power distribution apparatus 112 is configured to dynamically distribute, based on charging power actually required by the electric vehicle 20, the direct currents output by the plurality of AC-DC conversion apparatuses 1111, transmit distributed charging power to the charging terminal 12, and further transmit the charging power to the electric vehicle 20 through the charging connector 13 connected to the charging terminal 12, to charge the electric vehicle 20.

In some other embodiments, the power module 111 may include a plurality of AC-DC conversion apparatuses 1111, a plurality of direct current-to-direct current (direct current-direct current, DC-DC) conversion apparatuses 1112, and a direct current bus 1113. Input ends of the plurality of AC-DC conversion apparatuses 1111 are connected to the external power grid 200, output ends of the plurality of AC-DC conversion apparatuses 1111 are connected to input ends of the plurality of DC-DC conversion apparatuses 1112 through the direct current bus 1113, and output ends of the plurality of DC-DC conversion apparatuses 1112 are connected to the input end of the power distribution apparatus 112. The output end of the power distribution apparatus 112 is connected to the charging connector 13 through the charging terminal 12.

The plurality of AC-DC conversion apparatuses 1111 are configured to receive the alternating current from the external power grid 200, convert the alternating current into a direct current, and transmit the direct current to the direct current bus 1113. In other words, the direct current bus 1113 may aggregate first direct currents output by the plurality of AC-DC conversion apparatuses 1111. The plurality of DC-DC conversion apparatuses 1112 are configured to receive, through the direct current bus 1113, the direct currents output by the plurality of AC-DC conversion apparatuses 1111, further convert the direct currents into direct currents applicable to the electric vehicle 20, and transmit the direct currents to the power distribution apparatus 112. The power distribution apparatus 112 is configured to dynamically distribute, based on charging power actually required by the electric vehicle 20, the direct currents output by the plurality of DC-DC conversion apparatuses 1112, transmit distributed charging power to the charging terminal 12, and further transmit the charging power to the electric vehicle 20 through the charging connector 13 connected to the charging terminal 12, to charge the electric vehicle 20.

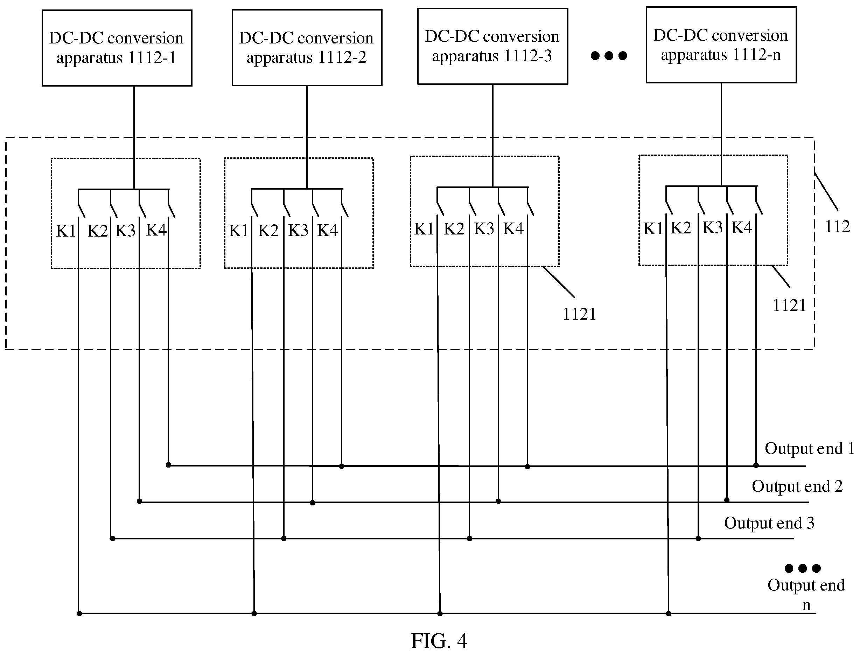

FIG. 4 is a diagram of a structure of an example of a power distribution apparatus 112 connected to the plurality of DC-DC conversion apparatuses 1112 shown in FIG. 3 according to an embodiment of this application.

Refer to FIG. 4. The power distribution apparatus 112 includes a plurality of power distribution units 1121. Each power distribution unit 1121 includes one input end and a plurality of output ends. An input end of each power distribution unit 1121 is connected to the plurality of output ends through a group of switch devices. Input ends of the plurality of power distribution units 1121 are used as a plurality of output ends of the power distribution apparatus 112, and are configured to be connected to output ends of the plurality of DC-DC conversion apparatuses 1112 in a one-to-one correspondence manner. One output end of each of the plurality of power distribution units 1121 is connected to one output end of another power distribution unit 1121, to form the plurality of output ends of the power distribution apparatus 112, that is, form an output end 1, an output end 2,..., and an output end n. During specific implementation, the plurality of output ends of the power distribution apparatus 112 are connected to a plurality of charging connectors 13 in a one-to-one correspondence manner, to connect to the electric vehicles 20.

As described in the foregoing background, in current actual application, different electric vehicles 20 usually require different charging power provided by charging devices 10. For example, for an electric vehicle 20 of an ultra-fast charging vehicle model, the electric vehicle 20 requires high charging power provided by a charging device 10, that is, requires high power output by an output end of a power distribution apparatus 112. For an electric vehicle 20 of a common vehicle model, the electric vehicle 20 requires low charging power provided by a charging device 10, that is, requires low power output by an output end of a power distribution apparatus 112.

The output power of the output end of the power distribution apparatus 112 depends mostly on power of the power module 111. However, a design manner of the power module 111 is fixed currently. As a result, a manner of outputting power by the output end of the power distribution apparatus 112 is also fixed. For example, to meet a high-power ultra-fast charging requirement of the electric vehicle 20 of the ultra-fast charging vehicle model, the power module 111 is usually directly designed based on high power. Correspondingly, power output by the output end of the power distribution apparatus 112 is usually high. If the power module 111 designed based on the high power is directly used to charge the electric vehicle 20 of the common vehicle model through the power distribution apparatus 112, power resources are prone to being wasted. In addition, the high-power power module 111 usually has high manufacturing costs and a large size, leading to limited installation space and insufficient installation flexibility in a special scenario such as a parking lot. Alternatively, to meet a low-power charging requirement of the electric vehicle 20 of the common vehicle model, for example, a fast charging requirement, the power module 111 is usually directly designed based on low power. Correspondingly, power output by the output end of the power distribution apparatus 112 is low. If the power module 111 designed based on the low power is directly used to charge the electric vehicle 20 of the ultra-fast charging vehicle model through the power distribution apparatus 112, a requirement of the electric vehicle for high-power ultra-fast charging may not be met.

Therefore, how to flexibly meet required charging power of different electric vehicles is an urgent problem to be resolved.

Based on the foregoing content, embodiments of this application provide a power distribution apparatus, a charging device including the power distribution apparatus, an energy storage device, and a charging system, to flexibly adjust output power of a load port that is of the power distribution apparatus and that is connected to a load, to meet required charging power of different loads.

The following separately describes in detail the power distribution apparatus, the charging device, the energy storage device, and the charging system provided in embodiments of this application with reference to the accompanying drawings.

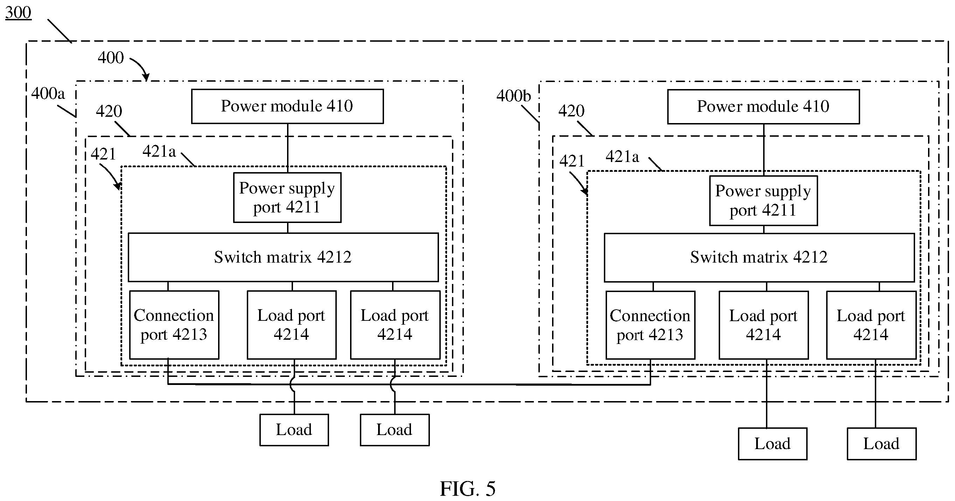

FIG. 5 is a diagram of a structure of a charging system 300 according to an embodiment of this application.

Refer to FIG. 5. The charging system 300 may include a plurality of charging devices 400. Each charging device 400 includes a power module 410 and a power distribution apparatus 420.

The power distribution apparatus 420 includes at least one power distribution unit 421. Each power distribution unit 421 includes at least one power supply port 4211, at least one connection port 4213, a plurality of load ports 4214, and a switch matrix 4212. Each power supply port 4211 is connected to the power module 410, and each load port 4214 is configured to connect to a load. Any two of each power supply port 4211, each connection port 4213, and each load port 4214 in each power distribution unit 421 are connected through the switch matrix 4212. The switch matrix 4212 is configured to turn off or on a connection between any two of each power supply port 4211, each connection port 4213, and each load port 4214.

It may be understood that, in this embodiment of this application, the power module 410 can provide direct current power required for charging. For example, the power module 410 may be the power module 111 shown in FIG. 2 or FIG. 3. The load may be, for example, the electric vehicle 20 shown in FIG. 1.

It may be further understood that, in this embodiment of this application, each connection port 4213 of the power distribution unit 421 may be configured to connect to an external apparatus that can provide direct current power and receive direct current power other than the power distribution unit 421 to which the connection port 4213 belongs. For example, each connection port 4213 of the power distribution unit 421 may be configured to connect to a connection port 4213 of a power distribution unit 421 in another charging device 400 other than the charging device 400 to which the power distribution unit 421 belongs. Alternatively, each connection port 4213 of the power distribution unit 421 may be configured to connect to a connection port 4213 of another power distribution unit 421 included in the power distribution apparatus 420 to which the connection port 4213 belongs. Further, each connection port 4213 of the power distribution unit 421 can receive direct current power output by a connected external apparatus, or output direct current power to the connected external apparatus.

During specific implementation, each power supply port 4211 of the power distribution unit 421 may be configured to receive direct current power output by the power module 410, and transmit the received direct current power to each load port 4214 through the switch matrix 4212, to charge the load connected to the load port 4214, or transmit the direct current power to each connection port 4213 through the switch matrix 4212. Each connection port 4213 of the power distribution unit 421 may be configured to output the direct current power transmitted by the power supply port 4211 to the connected external apparatus, or receive the direct current power output by the connected external apparatus, and transmit the received direct current power to each load port 4214 through the switch matrix 4212, to charge the load connected to the load port 4214.

Still refer to FIG. 5. In each charging device 400 in the charging system 300, the at least one power distribution unit 421 of the power distribution apparatus 420 includes a first power distribution unit 421a. One connection port 4213 of a first power distribution unit 421a of one charging device 400 is connected to one connection port 4213 of a first power distribution unit 421a of another charging device 400, so that power transmission is performed between the first power distribution units 421a of the two charging devices 400.

It may be understood that, in this embodiment of this application, at least one connection port 4213 of the first power distribution unit 421a is connected to the power distribution unit of the another charging device other than the charging device 400 to which the first power distribution unit 421a belongs. There may be one or more first power distribution units 421a in the power distribution apparatus 420.

During specific implementation, in the charging system 300, a connection port 4213 of a first power distribution unit 421a of any charging device 400 is connected to a connection port 4213 of a first power distribution unit 421a of another charging device 400, so that power transmission can be performed between the first power distribution unit 421a of any charging device 400 and the first power distribution unit 421a of the another charging device 400.

For example, the charging system 300 shown in FIG. 5 includes two charging devices 400 (namely, a charging device 400a and a charging device 400b), power distribution apparatuses 420 of the charging device 400a and the charging device 400b each include one first power distribution unit 421a, and the first power distribution unit 421a includes one connection port 4213. In this example, the connection port 4213 of the first power distribution unit 421a in the charging device 400a is connected to the connection port 4213 of the first power distribution unit 421a in the charging device 400b, to form a power sharing transmission line between the first power distribution unit 421a of the charging device 400a and the first power distribution unit 421a of the charging device 400b.

Therefore, power transmission may be performed between the first power distribution unit 421a of the charging device 400a and the first power distribution unit 421a of the charging device 400b through the power sharing transmission line, to implement power sharing between a power module 410 connected to the first power distribution unit 421a of the charging device 400a and a power module 410 connected to the first power distribution unit 421a of the charging device 400b.

When one load port 4214 of the first power distribution unit 421a of the charging device 400a is connected to an electric vehicle, if current output power of the load port 4214 is greater than or equal to required charging power of the electric vehicle, that is, the power currently output by the power module 410 of the charging device 400a through the load port 4214 meets the required charging power of the electric vehicle, the first power distribution unit 421a of the charging device 400a may optionally charge the electric vehicle in an independent running manner.

If the current output power of the load port 4214 is less than the required charging power of the electric vehicle, that is, the power currently output by the power module 410 of the charging device 400a through the load port 4214 cannot meet the required charging power of the electric vehicle, the first power distribution unit 421a of the charging device 400a may receive, through the connection port 4213, direct current power output by the first power distribution unit 421a of the charging device 400b, and transmit the received direct current power to the load port 4214, to increase the output power of the load port 4214.

Specifically, the power output by the power module 410 of the charging device 400b may be transmitted to the connection port 4213 of the first power distribution unit 421a in the charging device 400a through the connection port 4213 of the first power unit 421a in the charging device 400b. In this way, the first power distribution unit 421a of the charging device 400a can not only transmit, through the switch matrix 4212 to the load port 4214 connected to the electric vehicle, the power output by the power module 410 in the charging device 400a to which the first power distribution unit 421a belongs, but also transmit, through the switch matrix 4212 to the load port 4214 connected to the electric vehicle, power that is output by the first power distribution unit 421a in the charging device 400b and that is received through the connection port 4213. In other words, the first power distribution unit 421a of the charging device 400a can transmit the power output by the power module 410 of the charging device 400a and the power output by the power module 410 of the charging device 400b to the load port 4214 connected to the electric vehicle, to increase the output power of the load port 4214 connected to the electric vehicle, to meet the required charging power of the electric vehicle.

In the charging system 300 provided in this embodiment of this application, the first power distribution unit 421a of any charging device 400 can be connected to the connection port 4213 of the first power distribution unit 421a of the another charging device 400 through the disposed connection port 4213, and then the first power distribution unit 421a of any charging device 400 can perform power transmission with the connection port 4213 of the first power distribution unit 421a in the another charging device 400, to implement power sharing between power modules 410 of different charging devices 400. Further, in actual application, the connection port 4213 of the first power distribution unit 421a in any charging device 400 may transmit the power output by the first power distribution unit 421a in the another charging device 400 to the load port 4214, to flexibly adjust the output power of the load port 4214 of the first power distribution unit 421a in any charging device 400, to meet required charging power of different loads.

For example, when the charging system 300 is used in a full liquid-cooled ultra-fast charging station, the first power distribution unit 421a in any charging device 400 may transmit, to the load port 4214 through the disposed connection port 4213, power output by connection ports 4213 of first power distribution units 421a in a plurality of other charging devices 400, to increase the power output by the load port 4214 to the electric vehicle, to meet a requirement for high-power ultra-fast charging of the electric vehicle. This helps implement a charging speed of 1 kilometer per second, that is, helps charge the electric vehicle with enough electric energy for driving 1 kilometer in 1 second, and brings charging experience of "charge up while your coffee up" to users.

It may be understood that, when the charging system 300 is applied to the full liquid-cooled ultra-fast charging station, a charging power unit, a charging terminal, and a charging connector in each charging device 400 in the charging system 300 all dissipate heat through liquid cooling, and maximum output power of a single connector of each charging device 400 is greater than or equal to a preset power threshold. The preset power threshold may be, for example, 250 kW.

In addition, because the first power distribution unit 421a of any charging device 400 in the charging system 300 can receive, through the disposed connection port 4213, the power output by the first power distribution unit 421a of the another charging device 400, the power module 410 of each charging device 400 in the charging system 300 may be designed based on low power.

In actual application, when a low-power electric vehicle is charged, the first power distribution unit 421a may transmit, to the load port 4214, only power output by the power module 410 in the charging device 400 to which the first power distribution unit 421a belongs, so that output power of the load port 4214 meets a charging requirement of the low-power electric vehicle. When a high-power electric vehicle is charged, the first power distribution unit 421a may transmit, to the load port 4214, power output by the power module 410 in the charging device 400 to which the first power distribution unit 421a belongs and power output by the first power distribution unit 421a in another charging device 400 received through the connection port 4213, to increase output power of the load port 4214, thereby helping meet a charging requirement of the high-power electric vehicle, for example, an ultra-fast charging requirement.

In the foregoing technical solution, in comparison with designing the power module 410 based on high power, designing the power module 410 based on low power is more conducive to reducing design complexity of the charging device 400, reducing production costs of the charging device 400, and reducing a size of the charging device 400.

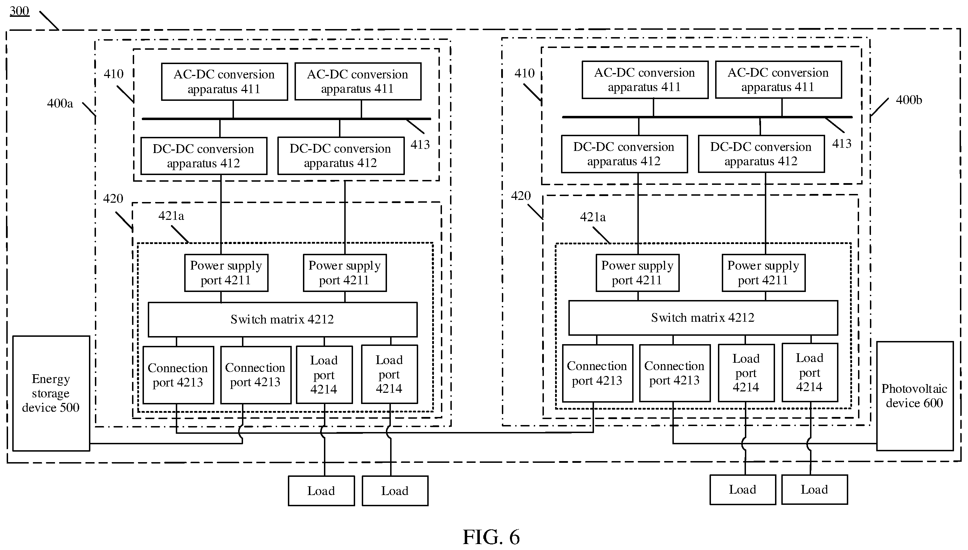

FIG. 6 is a diagram of a structure of another charging system 300 according to an embodiment of this application.

Refer to FIG. 6. In some embodiments, a power module 410 of each charging device 400 may include an AC-DC conversion apparatus 411, a DC-DC conversion apparatus 412, and a direct current bus 413. The AC-DC conversion apparatus 411 is connected to an input end of the DC-DC conversion apparatus 412 through the direct current bus 413, and an output end of the DC-DC conversion apparatus 412 is connected to each power supply port 4211 of each power distribution unit 421 in a power distribution apparatus 420. The AC-DC conversion apparatus 411 is configured to convert an alternating current into a first direct current and output the first direct current to the direct current bus 413. The DC-DC conversion apparatus 412 is configured to receive the first direct current through the direct current bus 413, convert the first direct current into a second direct current, and output the second direct current to the connected power supply port 4211.

It may be understood that there may be one or more AC-DC conversion apparatuses 411 and one or more DC-DC conversion apparatuses 412. During specific implementation, each power supply port 4211 of each power distribution unit 421 in the power distribution apparatus 420 may be connected to one DC-DC conversion apparatus 412.

In some other embodiments, the power module 410 of each charging device 400 may include only the AC-DC conversion apparatus 411, and each power supply port 4211 of each power distribution unit 421 in the power distribution apparatus 420 may be connected to the one AC-DC conversion apparatus 411.

For specific descriptions of the AC-DC conversion apparatus 411, the DC-DC conversion apparatus 412, and the direct current bus 413 in the power module 410, refer to the embodiments shown in FIG. 2 and FIG. 3. Details are not described herein again.

Still refer to FIG. 6. In some embodiments, the charging system 300 may further include at least one of an energy storage device 500 and a photovoltaic device 600. The energy storage device 500 and the photovoltaic device 600 may be separately connected to the connection port 4213 of the power distribution unit 421 in any charging device 400, so that the energy storage device 500 and the photovoltaic device 600 may separately perform power transmission with the power distribution unit 421 of the connected charging device 400.

During specific implementation, the energy storage device 500 and the photovoltaic device 600 may be connected to a connection port 4213 of a power distribution unit 421 of a same charging device 400 in the charging system 300, or may be connected to connection ports 4213 of power distribution units 421 of different charging devices 400 in the charging system 300.

For example, the charging system 300 shown in FIG. 6 includes two charging devices 400 (namely, the charging device 400a and the charging device 400b), one energy storage device 500, and one photovoltaic device 600, the power distribution apparatus 420 of the charging device 400a and the power distribution apparatus 420 of the charging device 400b each include one first power distribution unit 421a, and the first power distribution unit 421a includes two connection ports 4213. The one connection port 4213 of the first power distribution unit 421a in the charging device 400a is connected to the one connection port 4213 of the first power distribution unit 421a in the charging device 400b. Another connection port 4213 of the first power distribution unit 421a in the charging device 400a is connected to the energy storage device 500, and another connection port 4213 of the first power distribution unit 421a in the charging device 400b is connected to the photovoltaic device 600, to form three power sharing transmission lines between the first power distribution unit 421a in the charging device 400a and the first power distribution unit 421a in the charging device 400b, between the first power distribution unit 421a in the charging device 400a and the energy storage device 500, and between the first power distribution unit 421a in the charging device 400b and the photovoltaic device 600.

In this way, power transmission may be performed between the first power distribution unit 421a of the charging device 400a, the first power distribution unit 421a of the charging device 400b, the energy storage device 500, and the photovoltaic device 600 through the power sharing transmission line, to implement power sharing between the power module 410 connected to the first power distribution unit 421a of the charging device 400a, the power module 410 connected to the first power distribution unit 421a of the charging device 400b, the energy storage device 500, and the photovoltaic device 600.

When one load port 4214 of the first power distribution unit 421a of the charging device 400a is connected to the electric vehicle, if current output power of the load port 4214 is less than required charging power of the electric vehicle, the first power distribution unit 421a of the charging device 400a can not only transmit, to the load port 4214, the direct current power output by the first power distribution unit 421a of the charging device 400b and received by the one connection port 4213, but also transmit, to the load port 4214, the direct current power output by the energy storage device 500 and received by the another connection port 4213. In this way, the output power of the load port 4214 can be increased, to meet the required charging power of the electric vehicle.

Similarly, when the one load port 4214 of the first power distribution unit 421a of the charging device 400b is connected to the electric vehicle, if the current output power of the load port 4214 is less than the required charging power of the electric vehicle, the first power distribution unit 421a of the charging device 400b can not only transmit, to the load port 4214, the direct current power output by the first power distribution unit 421a of the charging device 400a and received by the one connection port 4213, but also transmit, to the load port 4214, the direct current power output by the photovoltaic device 600 and received by the another connection port 4213. In this way, the output power of the load port 4214 can be increased, to meet the required charging power of the electric vehicle.

In the charging system 300 provided in this embodiment of this application, the connection port 4213 of the first power distribution unit 421a of any charging device 400 can not only transmit, to the load port 4213, the power output by the power distribution unit 421 of the another charging device 400, but also transmit, to the load port 4213, the power output by the energy storage device 500 and/or the photovoltaic device 600. This can not only flexibly adjust the output power of the load port 4214 of the power distribution unit 421 in any charging device 400 to meet the required charging power of different loads, but also improve utilization of green resources such as photovoltaics and energy storage, and provide more abundant electric energy for the load.

In addition, if the energy storage device 500 and/or the photovoltaic device 600 are directly connected to the direct current bus 413 of the power module 410, that is, photovoltaics and energy storage are stacked on the direct current bus 413 of the power module 410, although the direct current power aggregated by the direct current bus 413 can be increased, the direct current power received by the DC-DC conversion apparatus 412 connected to the direct current bus subsequently increases, and then the output power output by the DC-DC conversion apparatus 412 through the load port 421 can be increased. However, because total rated output power of the DC-DC conversion apparatus 412 in the power module 410 usually needs to be greater than maximum power aggregated by the direct current bus 413, in the foregoing manner of increasing the output power of the load port 4214, as the direct current power aggregated by the direct current bus 413 increases, the DC-DC conversion apparatus 412 in the power module 410 usually also needs to be designed based on a high power pool.

In this embodiment of this application, the energy storage device 500 and/or the photovoltaic device 600 are connected to the connection port 4213 of the power distribution unit 421 in the charging device 400, so that the power output by the energy storage device 500 and/or the photovoltaic device 600 can be directly transmitted to the load port 4214 of the power distribution unit 421 through the connection port 4213 of the power distribution unit 421. Therefore, while output power of the load port 4214 is increased, it is more favorable to implement a low power design of the power module 410, and in particular, it is more favorable to implement a low power design of the DC-DC conversion apparatus 412 in the power module 410. This reduces overall design complexity of the power module 410, reduces production costs of the charging device 400, and reduces a size of the charging device 400.

The following uses the charging device 400a in the charging system 300 as an example to further describe in detail the charging device 400 provided in embodiments of this application and the power distribution apparatus 420 in the charging device 400. It should be understood that the following related descriptions of the charging device 400a are applicable to any charging device 400 in the charging system 300.

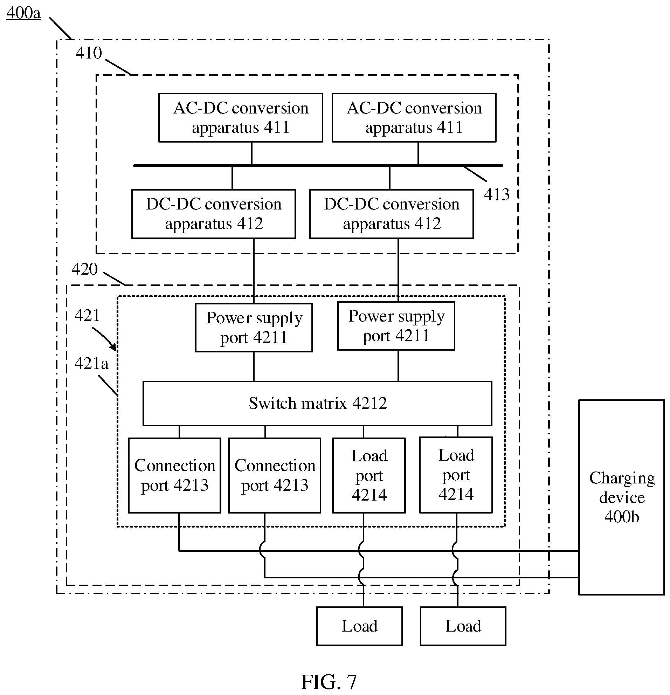

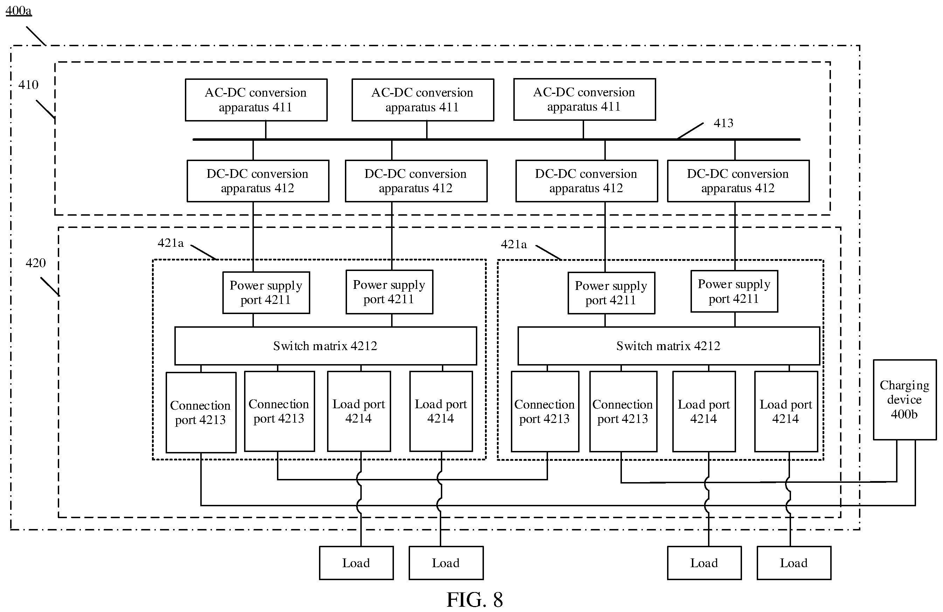

FIG. 7 and FIG. 8 each are a diagram of a structure of the charging device 400a according to an embodiment of this application.

Refer to FIG. 7 and FIG. 8, the charging device 400a may include a power module 410 and a power distribution apparatus 420.

The power distribution apparatus 420 includes at least one power distribution unit 421. Each power distribution unit 421 includes at least one power supply port 4211, at least one connection port 4213, a plurality of load ports 4214, and a switch matrix 4212. Each power supply port 4211 is configured to connect to the power module 410, and each load port 4214 is configured to connect to a load. Any two of each power supply port 4211, each connection port 423, and each load port 424 are connected through the switch matrix 4212. The switch matrix 4212 is configured to turn off or on a connection between any two of each power supply port 4211, each connection port 423, and each load port 424.

The at least one power distribution unit 421 in the power distribution apparatus 420 includes a first power distribution unit 421a. One connection port 4213 of the first power distribution unit 421a is configured to connect to a power distribution unit of another charging device, for example, configured to connect to a connection port 4213 of the first power distribution unit 421a in the charging device 400b shown in FIG. 5, so that power transmission is performed between the first power distribution unit 421a and the power distribution unit of the another charging device.

It may be understood that there may be one or more first power distribution units 421a in the power distribution apparatus 420. A plurality of first power distribution units 421a may be connected through connection ports 4213 disposed in the first power distribution units 421a.

For example, in some embodiments, as shown in FIG. 7, the power distribution apparatus 420 of the charging device 400a includes one first power distribution unit 421a, and the first power distribution unit 421a includes two connection ports 4213. For example, the two connection ports 4213 may be connected to the two connection ports 4213 of the first power distribution unit 421a in the charging device 400b shown in FIG. 5 in a one-to-one correspondence, so that a power sharing transmission line is formed between the first power distribution unit 421a of the charging device 400a and the first power distribution unit 421a of the charging device 400b.

In some other embodiments, as shown in FIG. 8, the power distribution apparatus 420 of the charging device 400a includes two first power distribution units 421a, and each first power distribution unit 421a includes two connection ports 4213. For example, one connection port 4213 of each of the two first power distribution units 421a is connected to one connection port 4213 of another first power distribution unit 421a, and another connection port 4213 of each of the two power distribution units 421a may be connected to two connection ports 4213 of the first power distribution unit 421a in the charging device 400b shown in FIG. 5 in a one-to-one correspondence, so that a power sharing transmission line is formed between the first power distribution unit 421a of the charging device 400a and the first power distribution unit 421a of the charging device 400b.

Therefore, power transmission may be performed between the first power distribution unit 421a of the charging device 400a and the first power distribution unit 421a of the charging device 400b through the foregoing power sharing transmission line, to implement power sharing between the power module 410 connected to the first power distribution unit 421a of the charging device 400a and the power module 410 connected to the first power distribution unit 421a of the charging device 400b.

For related descriptions of power transmission between the first power distribution unit 421a of the charging device 400a and the first power distribution unit 421a of the charging device 400b, refer to the embodiments shown in FIG. 5 and FIG. 6. Details are not described herein again.

In the charging device 400a provided in this embodiment of this application, the first power distribution unit 421a of the power distribution apparatus 420 may perform power transmission with a power distribution unit of another charging device through the disposed connection port 4213, to implement power sharing between the power module 410 of the charging device 400a and a power module of the another charging device. Further, in actual application, the connection port 4213 of the first power distribution unit 421a may transmit, to the load port 4214 of the first power distribution unit 421a, power output by the power distribution unit of the another charging device, to flexibly adjust output power of the load port 4214, to meet required charging power of different loads.

In addition, because the first power distribution unit 421a of the power distribution apparatus 420 in the charging device 400a can flexibly adjust the output power of the load port 4214 through the disposed connection port 4213, the power module 410 connected to the power distribution apparatus 420 in the charging device 400a may be designed based on low power, to reduce design complexity of the charging device 400a, reduce production costs of the charging device 400a, and reduce a size of the charging device 400a.

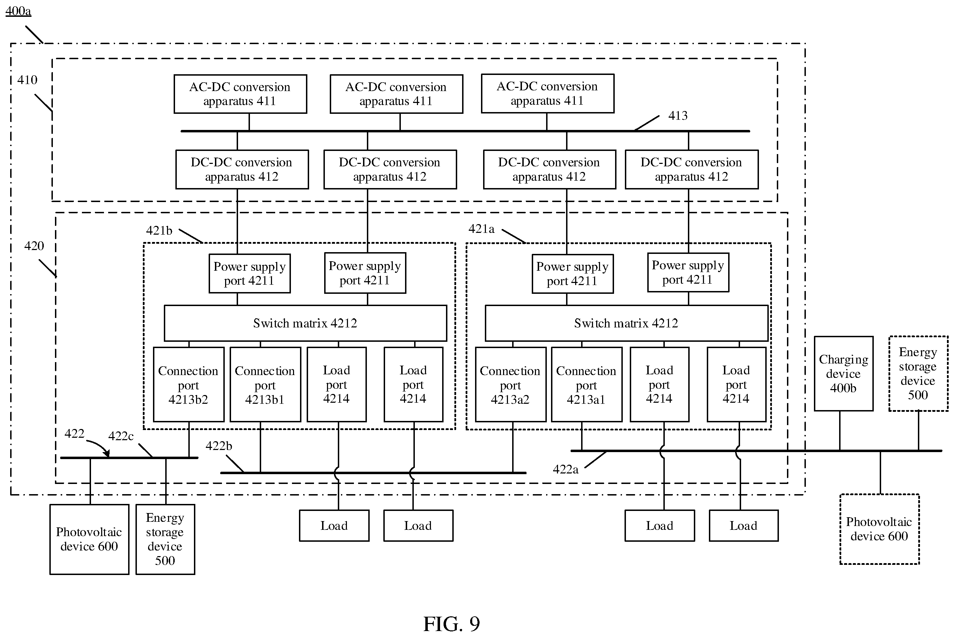

FIG. 9 is a diagram of a structure of another charging device 400a according to an embodiment of this application.

Refer to FIG. 9, different from the embodiments shown in FIG. 7 and FIG. 8, in the charging device 400a, at least one power distribution unit 421 of the power distribution apparatus 420 may include a first power distribution unit 421a and a second power distribution unit 421b. The first power distribution unit 421a may include a plurality of connection ports 4213, for example, include connection ports 4213a1 and 4213a2. The second power distribution unit 421b may include a plurality of connection ports 4213, for example, include a connection port 4213b1 and a connection port 4213b2.

One connection port 4213a1 of the first power distribution unit 421a is configured to connect to a power distribution unit of another charging device, for example, configured to connect to the connection port 4213 of the first power distribution unit 421a in the charging device 400b shown in FIG. 6. Another connection port 4213a2 of the first power distribution unit 421a is connected to one connection port 4213b1 of the second power distribution unit 421b. In this way, the first power distribution unit 421a can perform power transmission with a power distribution unit of the another charging device, and can also perform power transmission with the second power distribution unit 421b.

It may be understood that, in this embodiment of this application, none of the connection ports 4213 of the second power distribution unit 421b is connected to a power distribution unit of the another charging device other than the charging device 400a to which the second power distribution unit 421b belongs.

For example, each connection port 4213 in the second power distribution unit 421b may be connected to the connection port 4213 of the another power distribution unit 421 included in the power distribution apparatus 420 to which the second power distribution unit 421b belongs; or some connection ports 4213 in the second power distribution unit 421b may be connected to the connection ports 4213 of the another power distribution unit 421 included in the power distribution apparatus 420 to which the second power distribution unit 421b belongs, and the other connection ports 4213 are configured to connect to an energy storage device and/or a photovoltaic device.

FIG. 9 illustrates an example in which the connection port 4213b1 of the second power distribution unit 421b is connected to the another connection port 4213a2 of the first power distribution unit 421a, and the another connection port 4213b2 of the second power distribution unit 421b is configured to connect to the energy storage device and the photovoltaic device, for example, configured to connect to the energy storage device 500 and the photovoltaic device 600 shown in FIG. 6.

During specific implementation, in some embodiments, the power distribution apparatus 420 may further include at least one power sharing bus 422. Each connection port 4213 in the first power distribution unit 421a and the second power distribution unit 421b is connected to the another apparatus through one power sharing bus 422.

For example, as shown in FIG. 9, the power distribution apparatus 420 includes three power sharing buses 422, that is, includes power sharing buses 422a, 422b, and 422c. The connection port 4213a1 of the first power distribution unit 421a is connected to the power sharing bus 422a, and is connected to the connection port 4213 of the first power distribution unit 421a in the charging device 400b shown in FIG. 6 through the power sharing bus 422a. The another connection port 4213a2 of the first power distribution unit 421a is connected to the one connection port 4213b1 of the second power distribution unit 421b through the power sharing bus 422b. The another connection port 4213b2 of the second power distribution unit 421b is connected to the energy storage device 500 and the photovoltaic device 600 shown in FIG. 6 through the power sharing bus 422c.

In this way, the first power distribution unit 421a of the charging device 400a may perform power transmission with the first power distribution unit 421a of the charging device 400b through the power sharing bus 422a, to implement power sharing between the power module 410 of the charging device 400a and the power module 410 of the charging device 400b. In addition, the first power distribution unit 421a of the charging device 400a may perform power transmission with the second power distribution unit 421b of the charging device 400a through the power sharing bus 422b, to implement power sharing between different power distribution units 421 in a same power distribution apparatus 420.

Similarly, the second power distribution unit 421b of the charging device 400a may perform power transmission with the energy storage device 500 and the photovoltaic device 600 through the power sharing bus 422c, to implement power sharing between the power module 410 connected to the second power distribution unit 421b of the charging device 400a, the energy storage device 500, and the photovoltaic device 600.

When one load port 4214 of the first power distribution unit 421a in the charging device 400a is connected to the electric vehicle, if current output power of the load port 4214 is less than required charging power of the electric vehicle, the first power distribution unit 421a of the charging device 400a can not only transmit, to the load port 4214, the power output by the first power distribution unit 421a of the charging device 400b and received by the one connection port 4213a1, but also transmit, to the load port 4214, the power output by the second power distribution unit 421b and received by the another connection port 4213a2.

In this way, the output power of the load port 4214 can be increased to meet the required charging power of the electric vehicle, and utilization of the DC-DC conversion apparatus 412 that is connected to the second power distribution unit 421b and that is in the charging device 400a can be increased, thereby helping improve overall utilization of the power module 410 in the charging device 400a.

Similarly, when the one load port 4214 of the second power distribution unit 421b of the charging device 400a is connected to the electric vehicle, if current output power of the load port 4214 is less than required charging power of the electric vehicle, the second power distribution unit 421b can not only transmit, to the load port 4214, the power output by the energy storage device 500 and the photovoltaic device 600 and received by the another connection port 4213b2, but also transmit, to the load port 4214, the power output by the first power distribution unit 421a and received by the one connection port 4213b1.

In this way, the output power of the load port 4214 can be increased to meet the required charging power of the electric vehicle, and utilization of the DC-DC conversion apparatus 412 that is connected to the first power distribution unit 421a and that is in the charging device 400a can be increased, thereby helping improve overall utilization of the power module 410 in the charging device 400a.

It may be understood that the foregoing embodiment is described by using an example in which the power distribution apparatus 420 includes one first power distribution unit 421a and one second power distribution unit 421b. In this embodiment of this application, there may be one or more first power distribution units 421a and one or more second power distribution units 421b in the power distribution apparatus 420. In addition, there may be one or more connection ports 4213 in each of the first power distribution unit 421a and the second power distribution unit 421b.

In the charging device 400a provided in this embodiment of this application, the first power distribution unit 421a of the power distribution apparatus 420 may perform power transmission with the power distribution unit of another charging device through the disposed connection port 4213, or may perform power transmission with the connection port 4213 of the second power distribution unit 421b in the power distribution apparatus 420 to which the first power distribution unit 421a belongs through the disposed connection port 4213. Further, in actual application, the connection port 4213 of the first power distribution unit 421a may transmit the power output by the power distribution unit of the another charging device and the power output by the second power distribution unit 421b of the power distribution apparatus 420 to which the first power distribution unit 421a belongs to the load port 4214. This can flexibly adjust output power of the load port 4214 of the first power distribution unit 421a, to meet required charging power of different loads, and can also improve overall utilization of the power module 410 connected to the power distribution apparatus 420.

Further, in some examples, still refer to FIG. 9. When one connection port 4213a1 of the first power distribution unit 421a in the charging device 400a is connected to one connection port 4213 of the first power distribution unit 421a in the charging device 400b through the power sharing bus 422a, the power sharing bus 422a may be further configured to connect to the energy storage device and/or the photovoltaic device, for example, configured to connect to the energy storage device 500 and the photovoltaic device 600 shown in FIG. 6. The power sharing bus 422a may be configured to aggregate power output by the first power distribution unit 421a of the charging device 400a, power output by the first power distribution unit 421a of the charging device 400b, power output by the energy storage device 500, and power output by the photovoltaic device 600, to form a high power pool on the power sharing bus 422a.

In actual application, the connection port 4213a1 of the first power distribution unit 421a in the charging device 400a can obtain more power from the power sharing bus 422a, and transmit the obtained power to the load port 4214 of the first power distribution unit 421a, to improve the output power of the load port 4214 of the first power distribution unit 421a, thereby better meeting the required charging power of different loads.

Still refer to FIG. 9. In some embodiments, in the power distribution apparatus 420 of the charging device 400a, when the one connection port 4213a1 of the first power distribution unit 421a is configured to connect to the power distribution unit of the another charging device, and the another connection port 4213a2 is connected to the connection port 4213b1 of the second power distribution unit 421b, the connection port 4213a1 and the another connection port 4213a2 may be connected through the switch matrix 4212. The switch matrix 4212 is configured to turn off or on a connection between the one connection port 4213a1 and the another connection port 4213a2.

When the switch matrix 4212 connects the connection between the one connection port 4213a1 and the another connection port 4213a2, power transmission may also be performed between the power distribution unit of the another charging device connected to the connection port 4213a1 and the second power distribution unit 421b connected to the another connection port 4213a2. Specifically, when the switch matrix 4212 connects the one connection port 4213a1 and the another connection port 4213a2, the one connection port 4213a1 of the first power distribution unit 421a may transmit the power output by the first power distribution unit 421a of the charging device 400b to the another connection port 4213a2, and then transmit the power to the one connection port 4213b1 of the second power distribution unit 421b through the another connection port 4213a2.

In this way, the one connection port 4213b1 of the second power distribution unit 421b can not only transmit, to the load port 4214, the power output by the first power distribution unit 421a of the charging device 400a connected to the one connection port 4213b1, but also transmit, to the load port 4214, the power output by the first power distribution unit 421a of the charging device 400b not connected to the one connection port 4213b1. This helps improve the output power of the load port 4214 of the second power distribution unit 421b, thereby helping improve flexibility of the power distribution apparatus 420 in distributing output power to a load, to better meet required charging power of different loads.

Further, in some examples, in the power distribution apparatus 420 of the charging device 400a, any two connection ports 4213 of each power distribution unit 421 are connected through the switch matrix 4212, so that power transmission can be performed between any two connection ports 4213 of each power distribution unit 421.

The structure of the power distribution apparatus 420 in the charging device 400a is described above with reference to the accompanying drawings. The following uses the first power distribution unit 421a in the charging device 400a shown in FIG. 9 as an example to describe a specific topological structure of the switch matrix 4212 in the power distribution unit 421 provided in embodiments of this application. It should be understood that the following related descriptions of the switch matrix 4212 in the first power distribution unit 421a are applicable to any power distribution unit 421 in any charging device 400 in the charging system 300.

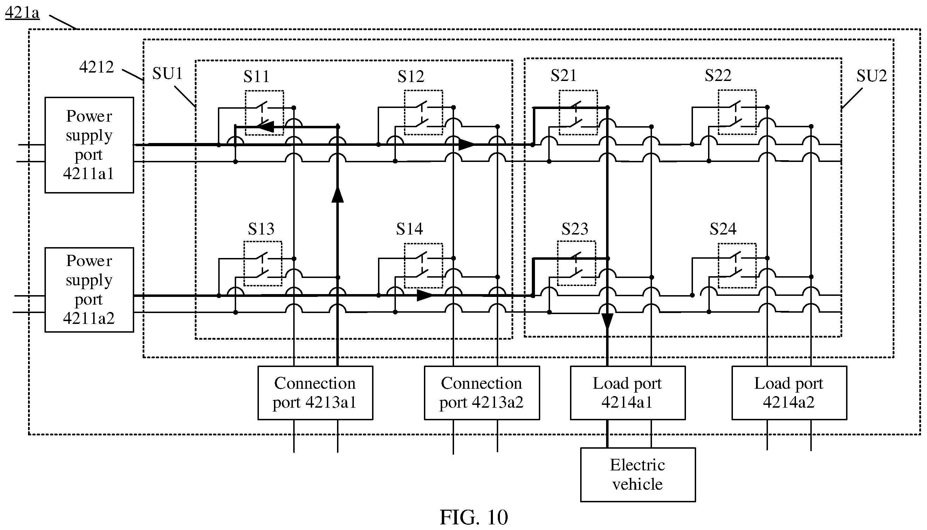

FIG. 10 is a diagram of a topological structure of an example power distribution unit 421a according to an embodiment of this application.

Refer to FIG. 10. The switch matrix 4212 of the first power distribution unit 421a may include a first switch unit (switch unit, SU) 1 and a second switch unit SU2. The first switch unit SU1 includes a plurality of first switches, and the second switch unit SU2 includes a plurality of second switches.

In the first power distribution unit 421a, each power supply port 4211 is connected to each connection port 4213 through the first switch unit SU1, each power supply port 4211 is connected to each load port 4214 through the second switch unit SU2, and each connection port 4213 is connected to each load port 4214 through the first switch unit SU1 and the second switch unit SU2.

Specifically, for example, the first power distribution unit 421a includes two power supply ports 4211 (namely, power supply ports 4211a1 and 4211a2), two connection ports 4213 (namely, connection ports 4213a1 and 4213a2), and two load ports 4214 (namely, load ports 4213a1 and 4213a2). The first switch unit SU1 includes four first switches (namely, first switches S11, S12, S13, and S14), and the second switch unit SU2 includes four second switches (namely, second switches S21, S22, S23, and S24).

The power supply port 4211a1 is connected to the connection port 4213a1 through the first switch S11, and is connected to the load port 4214a1 through the second switch S21. The rest may be deduced by analogy. The connection port 4213a1 may be connected to the load port 4214a1 through the first switch S11 and the second switch S21, or may be connected to the load port 4214a1 through the first switch S13 and the second switch S23. The rest may be deduced by analogy.

In addition, the connection port 4213a1 may be connected to the connection port 4213a2 through the first switch S12, or may be connected to the connection port 4213a2 through the first switch S14.

During specific implementation, refer to FIG. 9 and FIG. 10. The following uses an example in which the load port 4214a1 of the first power distribution unit 421a is connected to the electric vehicle and charges the electric vehicle. The second switch S21 and the second switch S23 are turned on, to connect a connection between the power supply port 4211a1 and the load port 4214a1, and a connection between the power supply port 4211a2 and the load port 4214a1. In this case, the power output by the power module 410 and received by the power supply port 4211a1 is transmitted to the load port 4214a1 through the second switch S21, and the power output by the power module 410 and received by the power supply port 4211a2 is transmitted to the load port 4214a1 through the second switch S23, to charge the electric vehicle.

If the output power transmitted to the load port 4214a1 by the power supply port 4211a1 and the power supply port 4211a2 is less than the required charging power of the electric vehicle, the first switch S11 is turned on, to connect the connection between the connection port 4213a1 and the load port 4214a1. In this case, the power output by the first power distribution unit 421a in the charging device 400b and received by the connection port 4213a1 may be transmitted to the load port 4214a1 through the first switch S11 and the second switch S21 in sequence, to increase the output power of the load port 4214a1, to meet the required charging power of the electric vehicle.

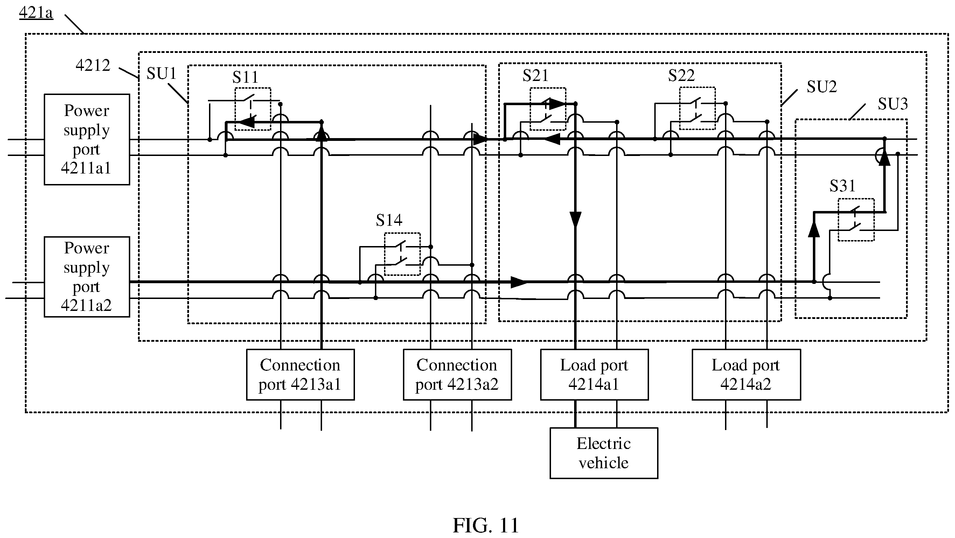

FIG. 11 is a diagram of a topology structure of another example of a power distribution unit 421a according to an embodiment of this application.

Refer to FIG. 11. Different from the embodiment shown in FIG. 10, in the embodiment shown in FIG. 11, in addition to the first switch unit SU1 and the second switch unit SU2, the switch matrix 4212 of the first power distribution unit 421a further includes a third switch unit SU3, and the third switch unit SU3 includes at least one third switch.

In the first power distribution unit 421a, two power supply ports 4211 in the plurality of power supply ports 4211 may be connected through the third switch unit SU3, so that one of the two power supply ports 4211 may be switched to the other power supply port 4211 through the third switch unit SU3, and each switch in a switch matrix 4212 connected to another power supply port 4211 is connected to each connection port 4213 and each load port 4214.

Specifically, for another example, the first power distribution unit 421a includes the power supply ports 4211a1 and 4211a2, the connection ports 4213a1 and 4213a2, and the load ports 4213a1 and 4213a2. The first switch unit SU1 includes two first switches (namely, the first switches S11 and S14), the second switch unit SU2 includes two second switches (namely, the second switches S21 and S22), and the third switch unit SU3 includes one third switch (namely, a third switch S31).

The power supply port 4211a1 is connected to the connection port 4213a1 through the first switch S11, and is connected to the load port 4214a1 through the second switch S21. Because the power supply port 4211a2 is connected to the power supply port 4211a1 through the third switch S31, the power supply port 4211a2 may be switched to the power supply port 4211a1 through the third switch S31, may be connected to the connection port 4213a1 through the first switch S11 connected to the power supply port 4211a1, and may be connected to the load port 4214a1 through the second switch S21 connected to the power supply port 4211a1. The rest may be deduced by analogy.

Correspondingly, the connection port 4213a1 may be connected to the load port 4214a1 through the first switch S11 and the second switch S21, the connection port 4213a2 may be connected to the load port 4214a1 through the first switch S14, and the third switch S31, and the second switch S21. The rest may be deduced by analogy.

During specific implementation, refer to FIG. 9 and FIG. 11. The following continues to use an example in which the load port 4214a1 of the first power distribution unit 421a is connected to the electric vehicle and charges the electric vehicle. The second switch S21 and the third switch S31 are turned on, to connect a connection between the power supply port 4211a1 and the load port 4214a1, and a connection between the power supply port 4211a2 and the load port 4214a1. In this case, the power output by the power module 410 and received by the power supply port 4211a1 is transmitted to the load port 4214a1 through the second switch S21, and the power output by the power module 410 and received by the power supply port 4211a2 is transmitted to the load port 4214a1 through the third switch S31 and the second switch S21, to charge the electric vehicle.

When the output power transmitted to the load port 4214a1 by the power supply port 4211a1 and the power supply port 4211a2 is less than the required charging power of the electric vehicle, the first switch S11 is turned on, to connect the connection between the connection port 4213a1 and the load port 4214a1. In this case, the power output by the first power distribution unit 421a in the charging device 400b and received by the connection port 4213a1 may be transmitted to the load port 4214a1 through the first switch S11 and the second switch S21 in sequence, to increase the output power of the load port 4214a1, to meet the required charging power of the electric vehicle.

It may be understood that the foregoing embodiment is described by using an example in which the first power distribution unit 421a includes the two power supply ports 4211. In some other embodiments, the first power distribution unit 421a may include three or more power supply ports 4211, and any two power supply ports 4211 may be connected through the third switch unit SU3.

In this embodiment of this application, in comparison with the embodiment shown in FIG. 10 in which the first switch unit SU1 of the switch matrix 4212 includes four first switches, and the second switch unit SU2 includes four second switches, the foregoing technical solution uses the third switch S31 to connect the power supply port 4211a2 and the power supply port 4211a2 of the first power distribution unit 421a, to implement connections between the power supply port 4211a1 and the power supply port 4211a2 and each connection port 4213 of the first power distribution unit 421a and each load port 4214 while reducing a quantity of switches in the first switch unit SU1 and the second switch unit SU2. Further, this helps improve switch utilization in the switch matrix 4212, and reduce a quantity of switches required in the switch matrix 4212, thereby reducing a size of the first power distribution unit 421a and reducing costs of the first power distribution unit 421a.

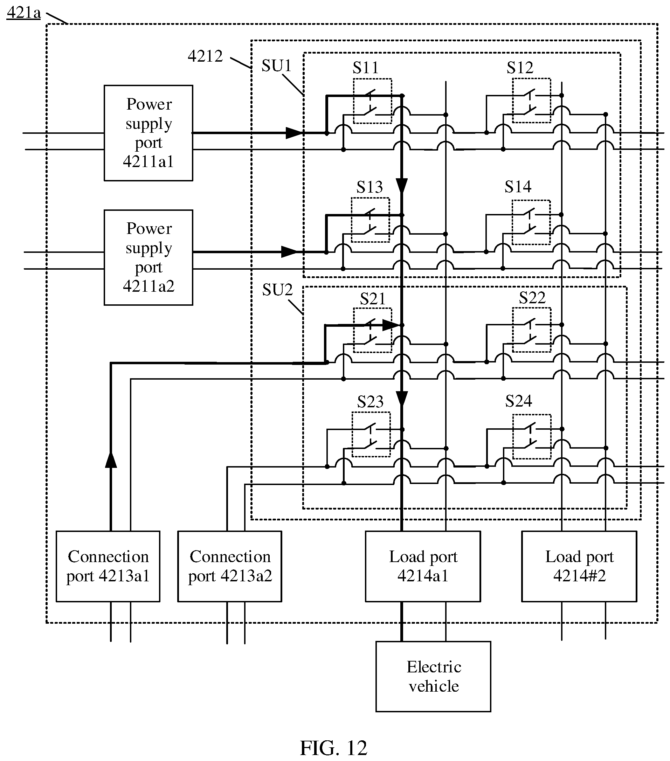

FIG. 12 is a diagram of a topology structure of another example of a power distribution unit 421 according to an embodiment of this application.

Refer to FIG. 12. In some embodiments, a switch matrix 4212 of the first power distribution unit 421a may include a first switch unit SU1 and a second switch unit SU2, the first switch unit SU1 includes a plurality of first switches, and the second switch unit SU2 includes a plurality of second switches.

In the first power distribution unit 421a, each power supply port 4211 is connected to each connection port 4213 through the first switch unit SU1 and the second switch unit SU2, each power supply port 4211 is connected to each load port 4214 through the first switch unit SU1, and each connection port 4213 is connected to each load port 4214 through the second switch unit SU2.

Specifically, for another example, the first power distribution unit 421a includes two power supply ports 4211 (namely, power supply ports 4211a1 and 4211a2), two connection ports 4213 (namely, connection ports 4213a1 and 4213a2), and two load ports 4214 (namely, load ports 4213a1 and 4213a2). The first switch unit SU1 includes four first switches (namely, first switches S11, S12, S13, and S14), and the second switch unit SU2 includes four second switches (namely, second switches S21, S22, S23, and S24).

The power supply port 4211a1 is connected to the load port 4214a1 through the first switch S11, and the connection port 4213a1 is connected to the load port 4214a1 through the second switch S21. The rest may be deduced by analogy. In addition, the power supply port 4211a1 may be connected to the connection port 4213al through the first switch S11 and the second switch S21, or may be connected to the connection port 4213al through the first switch S12 and the second switch S22. The rest may be deduced by analogy.

In addition, the connection port 4213a1 may be connected to the connection port 4213a2 through the second switch S21 and the second switch S23, or may be connected to the connection port 4213a2 through the second switch S22 and the second switch S24.

During specific implementation, refer to FIG. 9 and FIG. 12. The following continues to use an example in which the load port 4214a1 of the first power distribution unit 421a is connected to the electric vehicle and charges the electric vehicle. The first switch S11 and the first switch S13 are turned on, to connect a connection between the power supply port 4211a1 and the load port 4214a1, and a connection between the power supply port 4211a2 and the load port 4214a1. In this case, the power output by the power module 410 and received by the power supply port 4211a1 is transmitted to the load port 4214a1 through the first switch S11, and the power output by the power module 410 and received by the power supply port 4211a2 is transmitted to the load port 4214a1 through the first switch S13, to charge the electric vehicle.

When the output power transmitted to the load port 4214a1 by the power supply port 4211a1 and the power supply port 4211a2 is less than the required charging power of the electric vehicle, the second switch S21 is turned on, to connect the connection between the connection port 4213a1 and the load port 4214a1. In this case, the power output by the first power distribution unit 421a of the charging device 400b and received by the connection port 4213a1 may be transmitted to the load port 4214a1 through the second switch S21, to increase the output power of the load port 4214a1 to meet the required charging power of the electric vehicle.

In this embodiment of this application, each power supply port 4211 of the first power distribution unit 421a is connected to each load port 4214 through the first switch unit SU1, and each connection port 4213 is connected to each load port 4214 through the second switch unit SU2. Therefore, the connection port 4213 and the power supply port 4211 of the first power distribution unit 421a may separately and independently perform power transmission with the load port 4214.

For example, in a possible scenario, the connection port 4213a1 of the first power distribution unit 421a may transmit, to the load port 4214a1, the power output by a power distribution unit of the another charging device, and the power supply ports 4211a1 and 4211a2 may transmit, to the load port 4214a2, the power output by the power module 410. In other words, the load port 4214a1 may output only power shared by the power distribution unit of the another charging device. This helps improve output power flexibility of the load port 4214 of the first power distribution unit 421a.

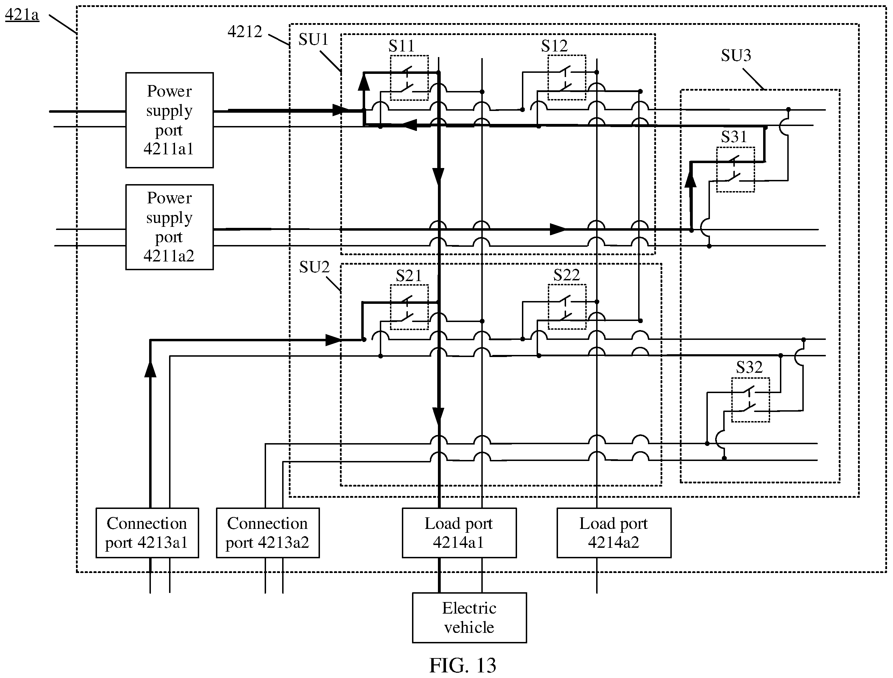

FIG. 13 is a diagram of a topology structure of another example of a power distribution unit 421 according to an embodiment of this application.

Refer to FIG. 13. The first power distribution unit 421a in the power distribution apparatus 420 for the charging device 400a shown in FIG. 9 is still used as an example. Different from the embodiment shown in FIG. 12, in the embodiment shown in FIG. 13, in addition to the first switch unit SU1 and the second switch unit SU2, the switch matrix 4212 of the first power distribution unit 421a further includes a third switch unit SU3, and the third switch unit SU3 includes at least one third switch.

In the first power distribution unit 421a, two of the plurality of power supply ports 4211 may be connected through the third switch unit SU3; and/or, two of the plurality of connection ports 4213 in the first power distribution unit 421a may be connected to each other through the third switch unit SU3. Therefore, one of the two power supply ports 4211 may be switched to the other power supply port 4211 through the third switch unit SU3, so that each switch in the switch matrix 4212 connected to the another power supply port 4211 is connected to each connection port 4213 and each load port 4214. Alternatively, one of the two connection ports 4213 may be switched to the another connection port 4213 through the third switch unit SU3, so that each switch in the switch matrix 4212 connected to the other connection port 4213 is connected to each power supply port 4211 and each load port 4214.

Specifically, for another example, the first power distribution unit 421a includes the power supply ports 4211a1 and 4211a2, the connection ports 4213a1 and 4213a2, and the load ports 4213a1 and 4213a2. The first switch unit SU1 includes two first switches (namely, first switches S11 and S12), the second switch unit SU2 includes two second switches (namely, second switches S21 and S22), and the third switch unit SU3 includes two third switches (namely, a third switch S31 and a third switch S32).

The power supply port 4211a1 is connected to the load port 4214a1 through the first switch S11, and the connection port 4213a1 is connected to the load port 4214a1 through the second switch S21. Because the power supply port 4211a2 is connected to the power supply port 4211a1 through the third switch S31, the power supply port 4211a2 may be switched to the power supply port 4211a1 through the third switch S31, and is connected to the load port 4214a1 through the first switch S11 connected to the power supply port 4211a1. Similarly, because the connection port 4213a2 is connected to the connection port 4213a1 through the third switch S32, the connection port 4213a2 may be switched to the connection port 4213a1 through the third switch S32, and is connected to the load port 4214a1 through the second switch S21 connected to the connection port 4213a2.

Correspondingly, the power supply port 4211a1 may be connected to the connection port 4213al through the first switch S11 and the second switch S21, and connected to the connection port 4213a2 through the first switch S11, the second switch S21, and the third switch S32. The rest may be deduced by analogy.

During specific implementation, refer to FIG. 9 and FIG. 13. The following continues to use an example in which the load port 4214a1 of the first power distribution unit 421a is connected to the electric vehicle and charges the electric vehicle. The first switch S11 and the third switch S31 are turned on, to connect a connection between the power supply port 4211a1 and the load port 4214a1, and a connection between the power supply port 4211a2 and the load port 4214a1. In this case, the power output by the power module 410 and received by the power supply port 4211a1 is transmitted to the load port 4214a1 through the first switch S11, and the power output by the power module 410 and received by the power supply port 4211a2 is transmitted to the load port 4214a1 through the third switch S31 and the first switch S11, to charge the electric vehicle.

When the output power transmitted to the load port 4214a1 by the power supply port 4211a1 and the power supply port 4211a2 is less than the required charging power of the electric vehicle, the second switch S21 is turned on, to connect the connection between the connection port 4213a1 and the load port 4214a1. In this case, the power output by the first power distribution unit 421a in the charging device 400b and received by the connection port 4213a1 may be transmitted to the load port 4214a1 through the second switch S21, to increase the output power of the load port 4214a1 to meet the required charging power of the electric vehicle.

It may be understood that the foregoing embodiment is described by using an example in which the first power distribution unit 421a includes two power supply ports 4211 and two connection ports 4213. In some other embodiments, the first power distribution unit 421a may include three or more power supply ports 4211, and any two power supply ports 4211 may be connected through the third switch unit SU3. Alternatively, the first power distribution unit 421a may include three or more connection ports 4213, and any two connection ports 4213 may also be connected through the third switch unit SU3.

In this embodiment of this application, in comparison with the embodiment shown in FIG. 12, the first switch unit SU1 of the switch matrix 4212 includes four first switches, and the second switch unit SU2 includes four second switches. In the foregoing technical solution, the third switch S31 is used to connect the power supply port 4211a2 of the first power distribution unit 421a to the power supply port 4211a2, and the third switch S32 is used to connect the connection port 4213a1 of the first power distribution unit 421a to the connection port 4213a2. In this way, the power supply port 4211a1 and the power supply port 4211a2 can be connected to each connection port 4213 of the first power distribution unit 421a and each load port 4214 when a quantity of switches in the first switch unit SU1 and the second switch unit SU2 is reduced. Further, this helps improve switch utilization in the switch matrix 4212, and reduce a quantity of switches required in the switch matrix 4212, thereby reducing a size of the first power distribution unit 421a and reducing costs of the first power distribution unit 421a.

The charging device 400a in the charging system 300 is used as an example to describe the charging device 400 provided in this embodiment of this application. The following further describes the energy storage device 500 and the photovoltaic device 600 in the charging system 300 with reference to the accompanying drawings.

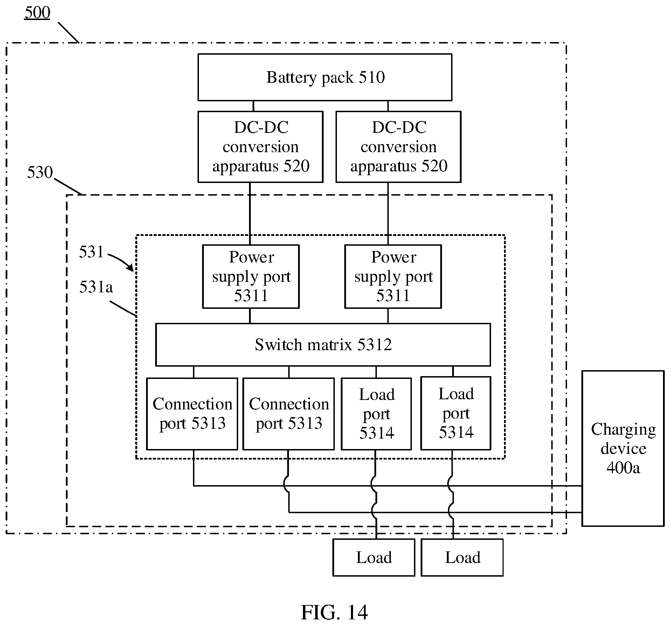

FIG. 14 is a diagram of a structure of an energy storage device 500 according to an embodiment of this application.

Refer to FIG. 14. The energy storage device 500 may include a battery pack 510, a DC-DC conversion apparatus 520, and a power distribution apparatus 530. The power distribution apparatus 530 includes at least one power distribution unit 531. Each power distribution unit 531 includes at least one power supply port 5311, at least one connection port 5313, a plurality of load ports 5314, and a switch matrix 5312.

The battery pack 510 is connected to each power supply port 5311 through the DC-DC conversion apparatus 520, and each load port 5314 is configured to connect to a load. Any two of each power supply port 5311, each connection port 5213, and each load port 5314 in each power distribution unit 531 are connected through the switch matrix 5312. The switch matrix 5312 is configured to turn off or on a connection between any two of each power supply port 5311, each connection port 5213, and each load port 5314.

The battery pack 510 may be configured to store electric energy or output electric energy. The DC-DC conversion apparatus 520 may be configured to perform power conversion on a direct current output by the battery pack 510 and then output the direct current to each power supply port 5311, or may be configured to perform power conversion on a direct current output by each power supply port 5311 and then output the direct current to the battery pack 510 to charge the battery pack 510. This is also referred to as storing electric energy. In other words, the DC-DC conversion apparatus 520 may be a bidirectional DC-DC conversion apparatus.

It may be understood that, in this embodiment of this application, there may be one or more battery packs 510 and one or more DC-DC conversion apparatuses 520. A plurality of battery packs 510 may be connected in series and/or in parallel, and then connected to input ends of the one or more DC-DC conversion apparatuses 520. An output end of each DC-DC conversion apparatus 520 may be connected to one DC-DC power supply port 5311.

It may be further understood that, in this embodiment of this application, in the power distribution apparatus 530, each connection port 5313 of the power distribution unit 531 may be configured to connect to an external apparatus that can provide direct current power and receive direct current power other than the power distribution unit 531 to which the connection port 5313 belongs. For example, each connection port 5313 of the power distribution unit 531 may be configured to connect to the connection port 4213 of the power distribution unit 421 in the charging device 400a shown in FIG. 7. Alternatively, each connection port 5313 of the power distribution unit 531 may be configured to connect to the connection port 5313 of the another power distribution unit 531 included in the power distribution apparatus 530 to which the connection port 5313 belongs.

During specific implementation, each power supply port 5313 of the power distribution unit 531 may be configured to transmit, through the switch matrix 5312, the direct current power output by the DC-DC conversion apparatus 520 to each load port 5314, to charge a load connected to the load port 5314, or transmit, through the switch matrix 5312, the direct current power to each connection port 5314, to output the direct current power to an external apparatus connected to each connection port 5314.

Each connection port 5314 of the power distribution unit 531 may be configured to output, to the connected apparatus, the direct current power transmitted by the power supply port 5311, or configured to receive the direct current power output by the connected external apparatus, and transmit the received direct current power to each load port 5314 through the switch matrix 5312, to charge a load connected to the load port 5314, or transmit the received direct current power to each power supply port 5311 through the switch matrix 5312, to charge the battery pack 510 through the DC-DC conversion apparatus 520.

Still refer to FIG. 14. The at least one power distribution unit 531 of the power distribution apparatus 530 includes a first power distribution unit 531a, and a connection port 5313 of the first power distribution unit 531a is configured to connect to a power distribution unit of a charging device, for example, configured to connect to the connection port 4213 of the first power distribution unit 421a of the charging device 400a shown in FIG. 7, so that power transmission is performed between the first power distribution unit 531a and the power distribution unit of the charging device.

It may be understood that, in this embodiment of this application, the first power distribution unit 531a has at least one connection port 5313 connected to the power distribution unit of the charging device. There may be one or more first power distribution units 531a in the power distribution apparatus 530.

It may be further understood that, in this embodiment of this application, there may be one or more connection ports 5313 that are in the first power distribution unit 531a and that are configured to connect to the power distribution unit of the charging device.

For example, the power distribution apparatus 530 of the energy storage device 500 shown in FIG. 14 includes one first power distribution unit 531a, and the one first power distribution unit 531a includes two connection ports 5313. The two connection ports 5313 of the first power distribution unit 531a may be connected to the two connection ports 4213 of the first power distribution unit 421a in the charging device 400a shown in FIG. 7 in a one-to-one correspondence. Therefore, power transmission may be performed between the first power distribution unit 531a in the energy storage device 500 and the first power distribution unit 421a in the charging device 400a, to implement power sharing between the energy storage device 500 and the charging device 400a.

When the load port 5314 of the first power distribution unit 531a in the energy storage device 500 is connected to the electric vehicle, the first power distribution unit 531a may receive, through the disposed connection port 5314, the direct current power output by the first power distribution unit 421a in the charging device 400a, and transmit the received direct current power to the load port 5314, to flexibly adjust output power of the load port 5314, to meet different required charging power of the electric vehicle.

For specific descriptions of implementing power sharing between the energy storage device 500 and the charging device 400a, refer to the related descriptions of implementing power sharing between the charging device 400a and the charging device 400b. Details are not described herein again.

For details that are not described in the power distribution apparatus 530 in the energy storage device 500, refer to the related descriptions of the power distribution apparatus 420 in the charging device 400a. Details are not described herein again.

In the energy storage device 500 provided in this embodiment of this application, after the direct current power output by the battery pack 510 is output through the DC-DC conversion apparatus 520, the direct current power can be directly transmitted to the electric vehicle through the load port 5314 in the power distribution apparatus 530. Therefore, the energy storage device 500 can charge the electric vehicle independently. This can improve utilization of energy storage resources, and help reduce an amount of electricity received from a power grid when the charging device is used to charge the electric vehicle, thereby reducing charging costs of the electric vehicle.

In addition, the first power distribution unit 531a of the power distribution apparatus 530 may perform power transmission with the power distribution unit of the charging device through the disposed connection port 5313, to implement power sharing between the energy storage device 500 and the charging device. Further, in actual application, the connection port 5313 of the first power distribution unit 531a may transmit, to the load port 5314, power output by the power distribution unit of the charging device, to flexibly adjust output power of the load port 5314, to meet charging requirements of different loads.

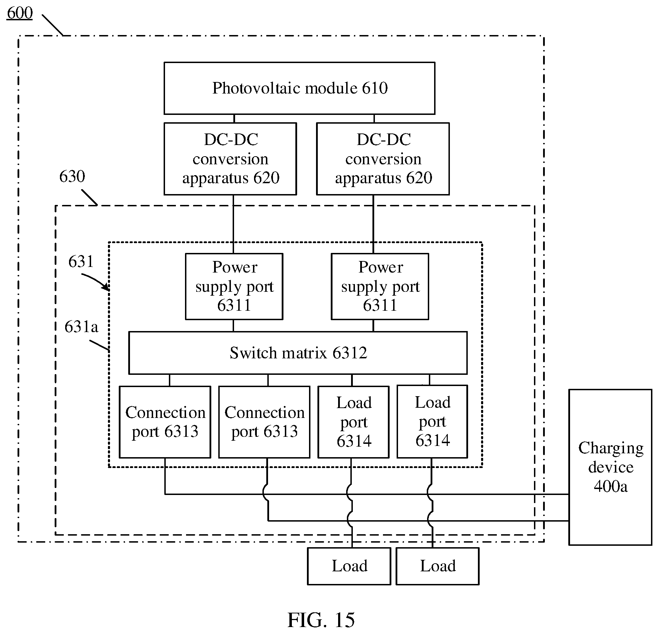

FIG. 15 is a diagram of a structure of a photovoltaic device 600 according to an embodiment of this application.

Refer to FIG. 15. The photovoltaic device 600 may include a photovoltaic module 610, a DC-DC conversion apparatus 620, and a power distribution apparatus 630. The power distribution apparatus 630 includes at least one power distribution unit 631. Each power distribution unit 631 includes at least one power supply port 6311, at least one connection port 6313, a plurality of load ports 6314, and a switch matrix 6312.

The photovoltaic module 610 is connected to each power supply port 6311 through the DC-DC conversion apparatus 620, and each load port 6314 is configured to connect to a load. Any two of each power supply port 6311, each connection port 6313, and each load port 6314 in each power distribution unit 631 are connected through the switch matrix 6312. The switch matrix 6312 is configured to turn off or on a connection between any two of each power supply port 6311, each connection port 6312, and each load port 6314.

The photovoltaic module 610 may be configured to convert light energy into electric energy and output the electric energy to the DC-DC conversion apparatus 620. The DC-DC conversion apparatus 620 may be configured to perform power conversion on a direct current output by the photovoltaic module 610 and output the direct current to each power supply port 6311.

It may be understood that, in this embodiment of this application, there may be one or more photovoltaic modules 610 and one or more DC-DC conversion apparatuses 620. An output end of each DC-DC conversion apparatus 620 may be connected to one power supply port 6311.

It may be further understood that, in this embodiment of this application, in the power distribution apparatus 630, each connection port 6313 of the power distribution unit 631 may be configured to connect to an external apparatus that can provide direct current power and receive direct current power other than the power distribution unit 631 to which the connection port 6313 belongs. For specific descriptions, refer to related descriptions of the connection port 6313 in the energy storage device 500. Details are not described herein again.

During specific implementation, each power supply port 6311 of the power distribution unit 631 may be configured to transmit, to each load port 6314 through the switch matrix 6312, the direct current power output by the DC-DC conversion apparatus 620, to charge a load connected to the load port 6314, or transmit, to each connection port 6314 through the switch matrix 6312, the direct current power to output the direct current power to the external apparatus connected to each connection port 6314. Each connection port 6314 of the power distribution unit 631 may be configured to receive the direct current power output by the connected external apparatus, and transmit the received direct current power to each load port 6314 through the switch matrix 6312, to charge the load connected to the load port 6314.

Still refer to FIG. 15. The at least one power distribution unit 631 of the power distribution apparatus 630 includes a first power distribution unit 631a, and a connection port 6313 of the first power distribution unit 631a is configured to connect to a power distribution unit of a charging device, for example, configured to connect to the connection port 4213 of the first power distribution unit 421a of the charging device 400a shown in FIG. 7, so that power transmission is performed between the first power distribution unit 631a and the power distribution unit of the charging device.

It may be understood that, in this embodiment of this application, the first power distribution unit 631a has at least one connection port 6313 connected to the power distribution unit of the charging device. There may be one or more first power distribution units 631a in the power distribution apparatus 630.

For example, the power distribution apparatus 630 the photovoltaic device 600 shown in FIG. 15 includes one first power distribution unit 631a, and the one first power distribution unit 631a includes two connection ports 6313. The two connection ports 6313 of the first power distribution unit 631a may be connected to the two connection ports 4213 of the first power distribution unit 421a in the charging device 400a shown in FIG. 7 in a one-to-one correspondence. In this way, power transmission may be performed between the first power distribution unit 631a in the photovoltaic device 600 and the first power distribution unit 421a in the charging device 400a, to implement power sharing between the photovoltaic device 600 and the charging device 400a.

When one load port 6314 in the first power distribution unit 631a in the photovoltaic device 600 is connected to the electric vehicle, the first power distribution unit 631a may receive, through the disposed connection port 6313, the direct current power output by the first power distribution unit 421a in the charging device 400a, and transmit the received direct current power to the load port 6314, to flexibly adjust output power of the load port 6314, to meet different required charging power of the electric vehicle.

For specific descriptions of implementing power sharing between the photovoltaic device 600 and the charging device 400a, refer to the foregoing related descriptions of implementing power sharing between the charging device 400a and the charging device 400b. Details are not described herein again.

For details that are not described in the power distribution apparatus 630 in the photovoltaic device 600, refer to the foregoing related descriptions of the power distribution apparatus 420 in the charging device 400 and the power distribution apparatus 530 in the energy storage device 500. Details are not described herein again.

In the photovoltaic device 600 provided in this embodiment of this application, after the direct current power output by the photovoltaic module 610 is output by the DC-DC conversion apparatus 620, the direct current power can be directly transmitted to the electric vehicle through the load port 6314 in the power distribution apparatus 630. Therefore, the photovoltaic device 600 can charge the electric vehicle independently. This can improve utilization of photovoltaic green resources, and help reduce an amount of electricity received from a power grid when the charging device is used to charge the electric vehicle, thereby reducing charging costs of the electric vehicle.

In addition, the first power distribution unit 631a of the power distribution apparatus 630 may perform power transmission with the power distribution unit of the charging device through the disposed connection port 6313, to implement power sharing between the photovoltaic device 600 and the charging device. In actual application, the connection port 6313 of the first power distribution unit 631a may transmit, to the load port 6314, the power output by the power distribution unit of the charging device, to flexibly adjust output power of the load port 6314, to meet charging requirements of different loads.

The foregoing further describes in detail the structures of the charging device 400, the energy storage device 500, and the photovoltaic device 600 in the charging system 300 provided in embodiments of this application with reference to the accompanying drawings. The following describes different connection manners of connection ports in power distribution apparatuses of devices in the charging system 300 by using examples.

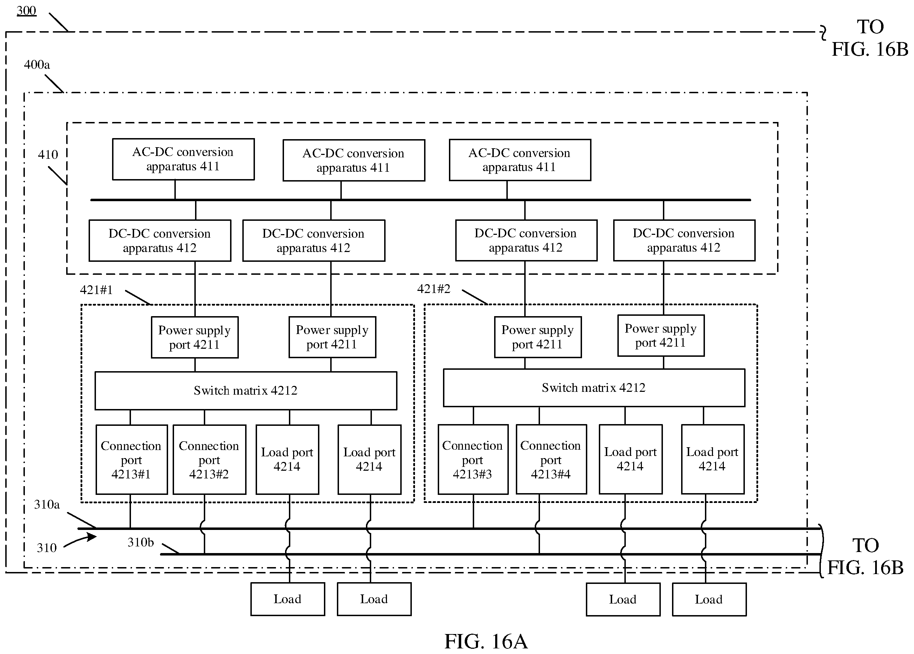

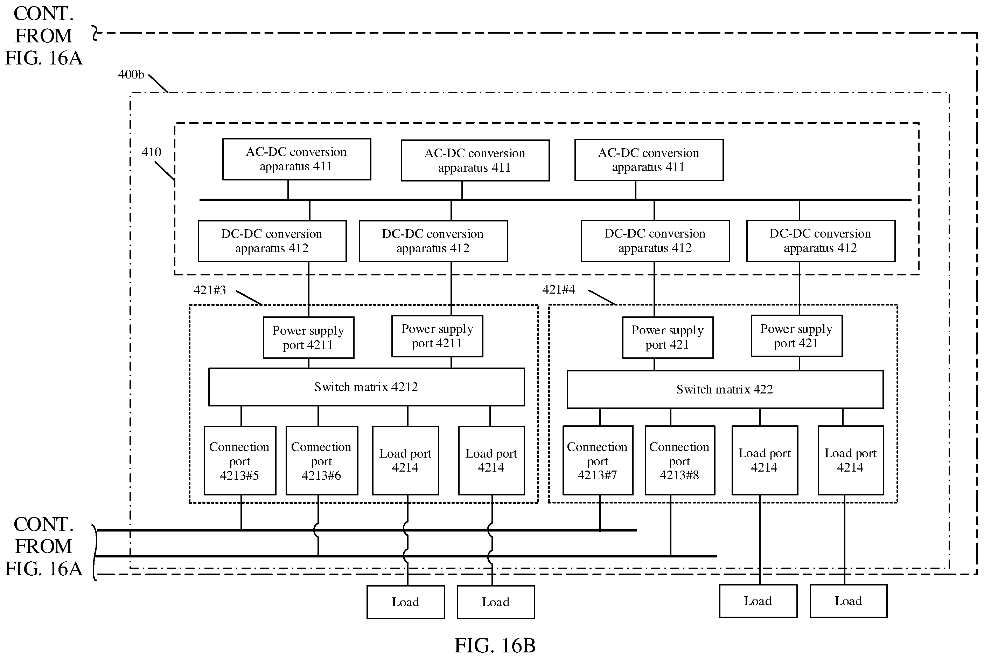

FIG. 16A and FIG. 16B are a diagram of a structure of an example of the charging system 300 according to an embodiment of this application.

Refer to FIG. 16A and FIG. 16B. The charging system 300 includes a plurality of charging devices 400 and a power sharing bus 310. A connection port 4213 of each power distribution unit 421 in each charging device 400 is connected to the power bus 310. The power sharing bus 310 may be configured to aggregate power output by each power distribution unit 421 in each charging device 400 in the charging system 300, to form a high power pool on the power sharing bus 310.

It may be understood that, because each power distribution unit 421 in each charging device 400 is connected to a power distribution unit 421 in another charging device 400 in the charging system 300 through the power sharing bus 310, each power distribution unit of each charging device 400 may be the first power distribution unit 421a described above.

In some embodiments, to facilitate connection between power distribution units 421 in charging devices 400 in the charging system 300 through the power sharing bus 310, quantities of connection ports 4213 of power distribution units 421 in each charging device 400 in the charging system 300 may be equal, and a quantity of power sharing buses 310 is equal to a quantity of connection ports 4213 of each power distribution unit 421.

During specific implementation, a connection port 4213 of any power distribution unit 421 in any charging device 400 may obtain, through the power sharing bus 310, power output by connection ports 4213 of all power distribution units 421 included in all other charging devices 400 in the charging system 300. Further, the connection port 4213 of any power distribution unit 421 may transmit the obtained power to the load port 4214 of any power distribution unit 421. This is more conducive to increasing output power of the load port 4214 of any power distribution unit 421, thereby better meeting required charging power of different loads.

For example, the charging system 300 shown in FIG. 16A and FIG. 16B includes two charging devices 400, and a power distribution apparatus 420 of each charging device 400 includes two power distribution units 421. For example, each power distribution unit 421 includes two connection ports 4213 and two load ports 4214. In other words, the charging system 300 includes a charging device 400a and a charging device 400b, a power distribution apparatus 420 of the charging device 400a includes power distribution units 421#1 and 421#2, the power distribution unit 421#1 includes connection ports 4213#1 and 4213#2, the power distribution unit 421#2 includes connection ports 4213#3 and 4213#4, a power distribution apparatus 420 of the charging device 400b includes power distribution units 421#3 and 421#4, the power distribution unit 421#3 includes connection ports 4213#5 and 4213#6, and the power distribution unit 421#4 includes connection ports 4213#7 and 4213#8. The charging system 300 may include two power sharing buses 310, that is, include power sharing buses 310a and 310b.

The connection port 4213#1, the connection port 4213#3, the connection port 4213#5, and the connection port 4213#7 are connected to the power sharing bus 310a, and the connection port 4213#2, the connection port 4213#4, the connection port 4213#6, and the connection port 4213#8 are connected to the power sharing bus 310b. Therefore, two power sharing transmission lines are formed in the charging system 300 through the power sharing buses 310a and 310b. Any power distribution unit 421 in the charging device 400a and the charging device 400b may obtain, through any one of the foregoing power sharing transmission lines, power output by all remaining power distribution units 421 in the charging device 400a and the charging device 400b.

In a possible application scenario, when one load port 4214 of the power distribution unit 421#1 in the charging device 400a is connected to an electric vehicle, if current output power of the load port 4214 is less than required charging power of the electric vehicle, the connection port 4213#1 of the power distribution unit 421#1 may obtain, through the power sharing bus 310a, power output by the power distribution units 421#2 to 421#4, and transmit the obtained power to the load port 4214, thereby facilitating meeting required charging power of an electric vehicle.

In another possible application scenario, when two load ports 4214 of the power distribution unit 421#1 in the charging device 400a are respectively connected to two electric vehicles, if the charging device 400b does not charge the electric vehicles, that is, the power distribution unit 421#3 and the power distribution unit 421#4 in the charging device 400b are in an idle state, the connection port 4213#1 of the power distribution unit 421#1 may obtain, through the power sharing bus 310a, power output by the power distribution unit 421#3 and the power distribution unit 421#4, and transmit the obtained power to the two load ports 4214.

In the charging system 300 provided in this embodiment of this application, power of the power distribution units 421#3 and 421#4 that are in an idle state in the charging device 400b is shared with the power distribution unit 421#1 in the charging device 400a. This not only helps the output power of the load ports 4214 of the power distribution unit 421#1 meet required charging power of the electric vehicles, but also helps improve utilization of power resources in the charging device 400b. This avoids device aging caused by long-term independent running of the charging device 400a, thereby improving overall running efficiency of the charging system 300 and prolonging working lifespans of charging devices 400 in the charging system 300.

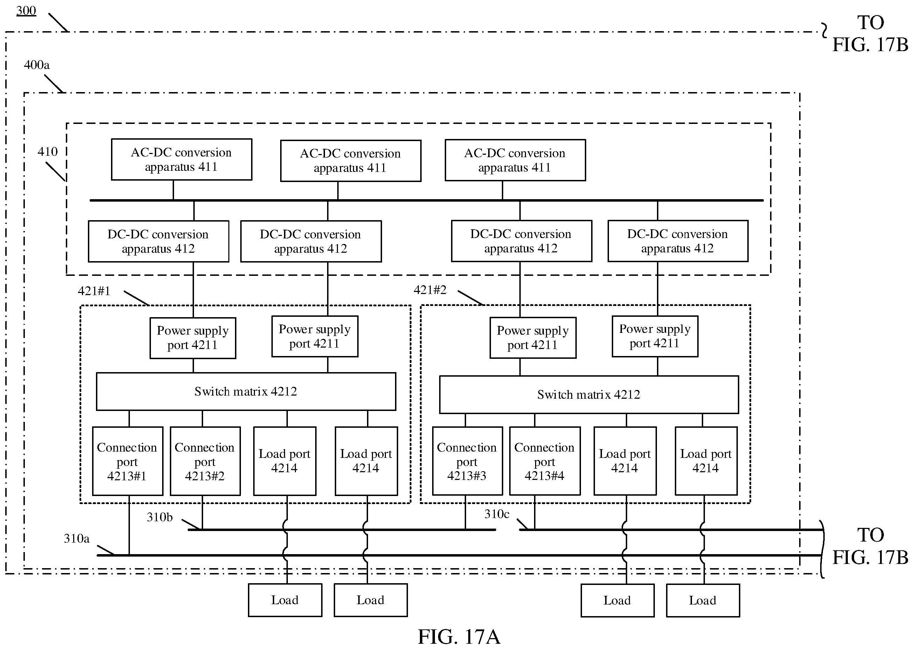

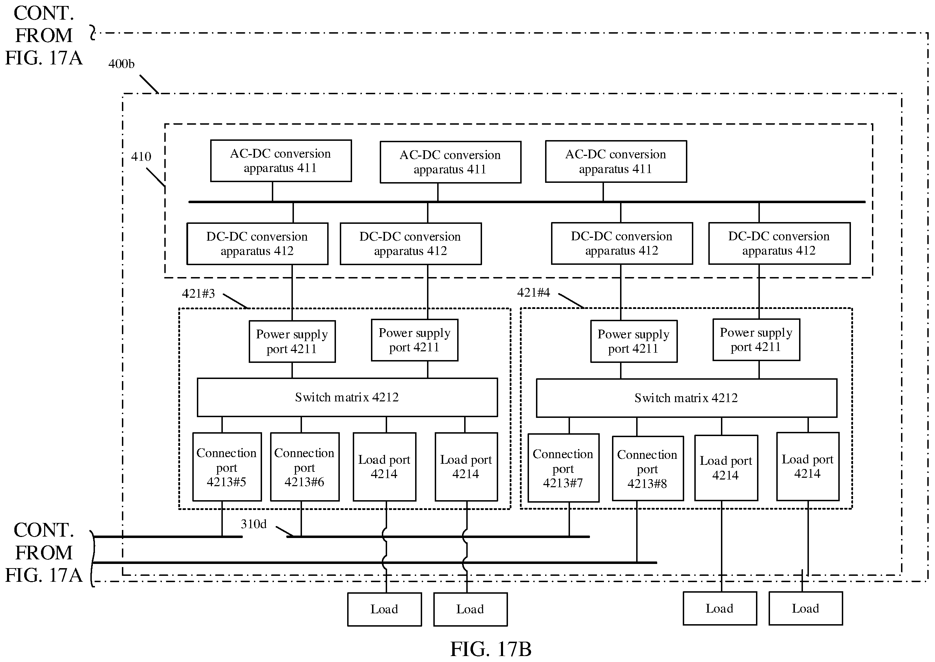

FIG. 17A and FIG. 17B are a diagram of a structure of another example of the charging system 300 according to an embodiment of this application.

Refer to FIG. 17A and FIG. 17B. Different from the embodiment shown in FIG. 16A and FIG. 16B, in the plurality of charging devices 400 in the charging system 300, connection ports 4213 of two adjacent power distribution units 421 are connected through one power sharing bus 310.

For example, as shown in FIG. 17A and FIG. 17B, still using an example in which the charging system 300 shown in FIG. 16A and FIG. 16B includes the charging device 400a and the charging device 400b, the charging system 300 further includes four power sharing buses 310, that is, includes power sharing buses 310a, 310b, 310c, and 310d. The connection port 4213#1 and the connection port 4213#8 are connected through the power sharing bus 310a, the connection port 4213#2 and the connection port 4213#3 are connected through the power sharing bus 310b, the connection port 4213#4 and the connection port 4213#5 are connected through the power sharing bus 310c, and the connection port 4213#6 and the connection port 4213#7 are connected through the power sharing bus 310d. In this way, four power sharing transmission lines are formed in the charging system 300 through the power sharing buses 310a, 310b, 310c, and 310d. Any power distribution unit 421 in the charging device 400a and the charging device 400b may obtain, through the connected power sharing bus 310, power output by a neighboring power distribution unit 421.

It may be understood that, during specific implementation, when two connection ports 4213 in each power distribution unit 421 included in the charging device 400a and the charging device 400b are connected through the switch matrix 4212, power transmission may also be performed between power sharing buses 310 separately connected to the two connection ports 4213 in a same power distribution unit 421. Therefore, any power distribution unit 421 in the charging device 400a and the charging device 400b can obtain, through the connected power sharing bus 310, power output by all remaining power distribution units 421 in the charging device 400a and the charging device 400b.

For example, the connection port 4213#2 of the power distribution unit 421#1 obtains the power output by the power distribution units 421#2 to 421#4 through the connected power sharing bus 310b. When the switch matrix 4212 in the power distribution unit 421#2 connects the connection ports 4213#3 and 4213#4, and the switch matrix 4212 in the power distribution unit 421#3 connects the connection ports 4213#5 and 4213#6, power output by the power distribution units 421#3 and 421#4 and aggregated by the power sharing bus 310d may be transmitted to the connection port 4213#5 through the connection port 4213#6, and then transmitted to the power sharing bus 310c through the connection port 4213#5. Further, the power sharing bus 310c may transmit aggregated power output by the power distribution units 421#2 to 421#4 to the connection port 4213#3 through the connection port 4213#4, and then transmit the power to the connection port 4213#2 of the power distribution unit 421#1 through the connection port 4213#3 and the power sharing bus 310b. In this way, the connection port 4213#2 may transmit the aggregated power output by the power distribution units 421#2 to 421#4 to the load port 4214 connected to the electric vehicle, to increase the output power of the load port 4214 and meet the required charging power of the electric vehicle.

In the charging system 300 provided in this embodiment of this application, connection ports 4213 of two adjacent power distribution units 421 in the plurality of charging devices 400 are connected through one power sharing bus 310, so that a plurality of power sharing transmission lines can be formed in the charging system 300. This improves flexibility of power transmission between power distribution units 421 of different charging devices 400 in the charging system 300, so that the power distribution units 421 included in the charging devices 400 in the charging system 300 can better meet required charging power of different loads.

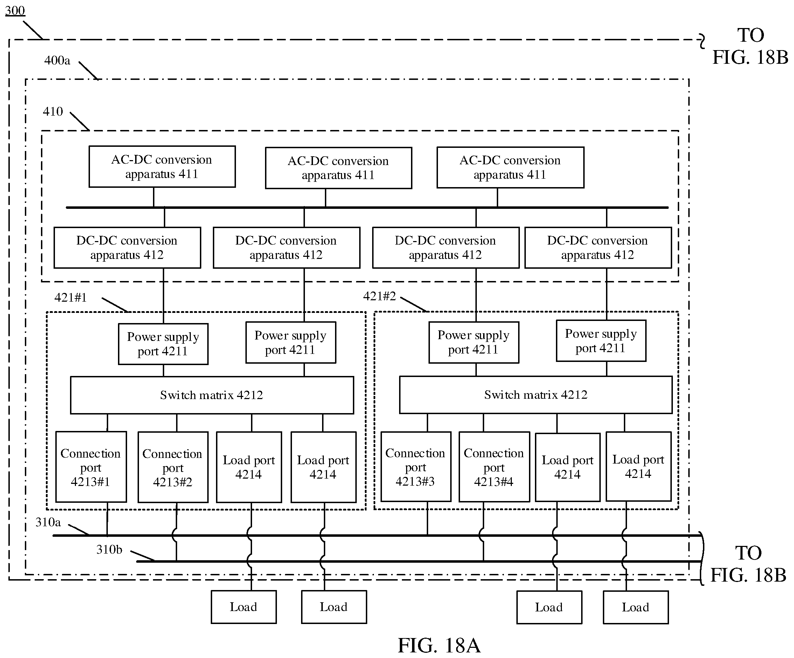

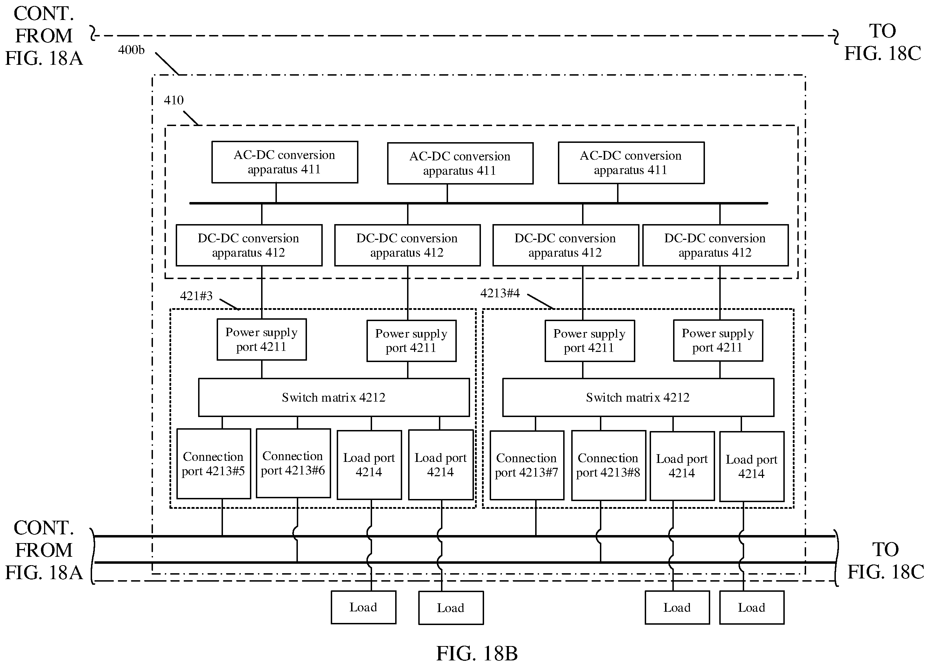

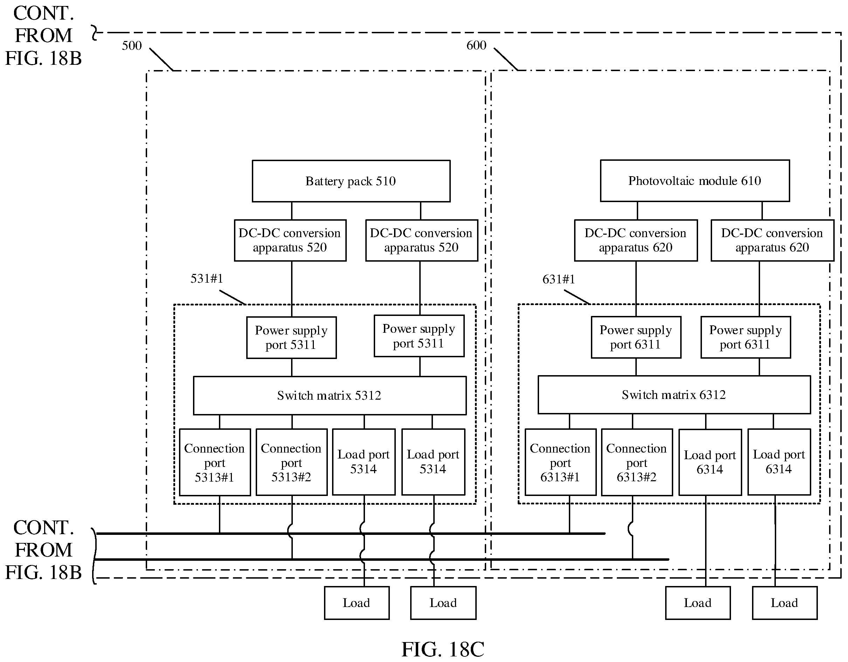

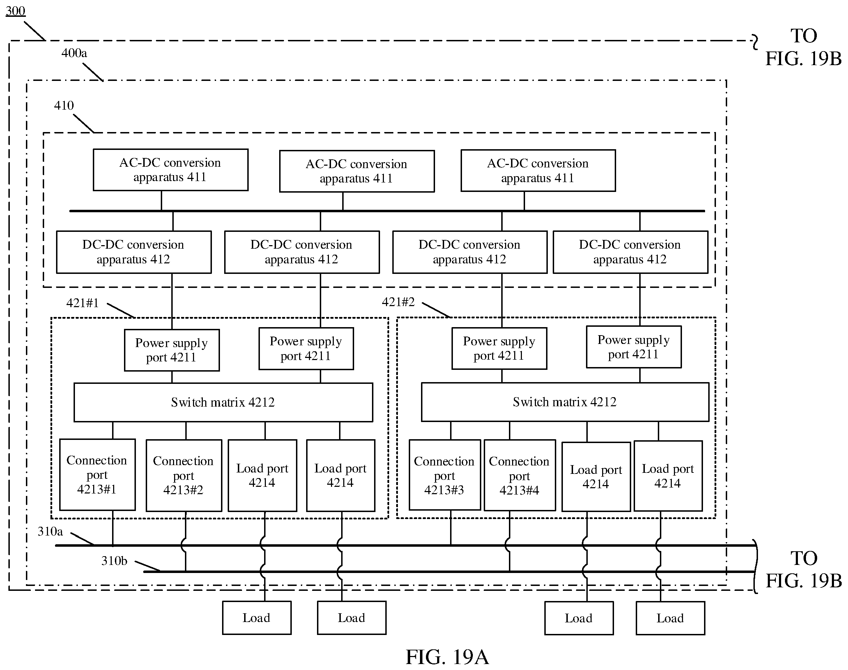

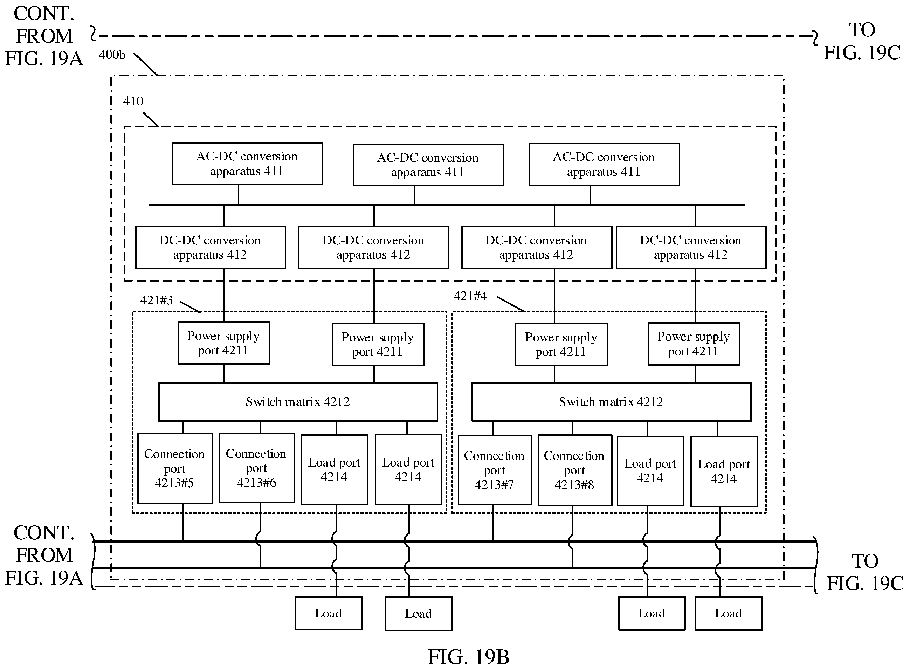

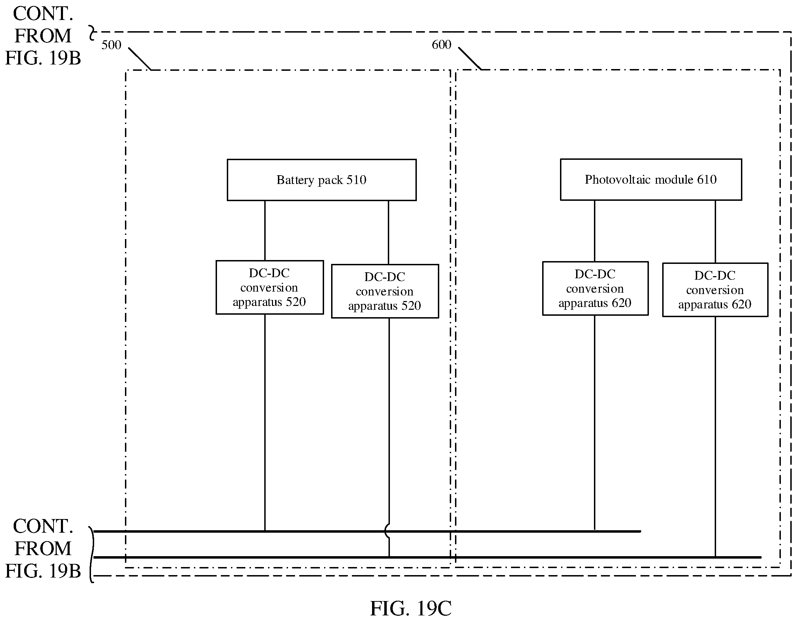

FIG. 18A to FIG. 18C and FIG. 19A to FIG. 19C each are a diagram of a structure of another example of a charging system 300 according to an embodiment of this application.

With reference to FIG. 18A to FIG. 18C and FIG. 19A to FIG. 19C, different from the embodiments shown in FIG. 16A and FIG. 16B and FIG. 17A and FIG. 17B, in addition to the plurality of charging devices 400 and the power sharing bus 310, the charging system 300 further includes an energy storage device 500 and/or a photovoltaic device 600. The energy storage device 500 and/or the photovoltaic device 600, and one connection port 4213 of each power distribution unit 421 in each charging device 400 are connected to the power sharing bus 310. The power sharing bus 310 may be configured to aggregate power output by the energy storage device 500 and/or the photovoltaic device 600 in the charging system 300 and power output by each power distribution unit 421 in each charging device 400.

During specific implementation, in some embodiments, as shown in FIG. 18A to FIG. 18C, the energy storage device 500 includes a power distribution apparatus 530, and the photovoltaic device 600 includes a power distribution apparatus 630. One connection port 5313 of each power distribution unit 531 in the power distribution apparatus 530, one connection port 6313 of each power distribution unit 631 in the power distribution apparatus 630, and one connection port 4213 of each power distribution unit 421 in each charging device 400 are all connected to the power sharing bus 310. In this way, a connection port of any power distribution unit of any device in the charging system 300 can obtain, through the power sharing bus 310, power output by connection ports of all remaining power distribution units in the charging system 300.

For example, as shown in FIG. 18A to FIG. 18C, still using an example in which the charging system 300 shown in FIG. 16A and FIG. 16B includes a charging device 400a, a charging device 400b, a power sharing bus 310a, and a power sharing bus 310b, the charging system 300 further includes the energy storage device 500 and the photovoltaic device 600. The power distribution apparatus 530 of the energy storage device 500 includes a power distribution unit 531#1, and the power distribution unit 531#1 includes connection ports 5313#1 and 5313#2. The power distribution apparatus 630 of the photovoltaic device 600 includes a power distribution unit 631#1, and the power distribution unit 631#1 includes connection ports 6313#1 and 6313#2.

The connection port 4213#1, the connection port 4213#3, the connection port 4213#5, the connection port 4213#7, the connection port 5313#1, and the connection port 6313#1 are connected to the power sharing bus 310a, and the connection port 4213#2, the connection port 4213#4, the connection port 4213#6, the connection port 4213#8, the connection port 5313#2, and the connection port 6313#2 are connected to the power sharing bus 310b. Therefore, two power sharing transmission lines are formed in the charging system 300 through the power sharing buses 310a and 310b.

In a possible application scenario, when one load port 5314 of the power distribution unit 531#1 in the energy storage device 500 is connected to the electric vehicle, if current output power of the load port 5314 is less than required charging power of the electric vehicle, the connection port 5313#1 of the power distribution unit 531#1 may obtain, through the power sharing bus 310a, power output by the power distribution units 421#1 to 421#4 and the power distribution unit 631#1, and transmit the obtained power to the load port 5314, thereby facilitating meeting required charging power of an electric vehicle.

In the charging system 300 provided in this embodiment of this application, the energy storage device 500 and the photovoltaic device 600 may separately charge the electric vehicle through the power distribution apparatuses disposed in the energy storage device 500 and the photovoltaic device 600, so that the charging system 300 can charge more electric vehicles at the same time, and charging efficiency of the charging system 300 for charging the electric vehicles is improved. In addition, the energy storage device 500 and the photovoltaic device 600 may further perform power transmission with the power distribution unit 421 of the charging device 400 through the power distribution apparatuses disposed in the energy storage device 500 and the photovoltaic device 600. Therefore, in actual application, when a grid electricity price is at a low electricity price, the power distribution unit 421 of the charging device 400 may transmit, to the energy storage device 500, electricity received from a grid, so that the energy storage device 500 stores as much electricity as possible. When the grid electricity price is high, the energy storage device 500 is preferentially used to charge the electric vehicle, to reduce an amount of electricity received from the grid when the charging device 400 is used to charge the electric vehicle, thereby reducing charging costs of the electric vehicle.

In some other embodiments, as shown in FIG. 19A to FIG. 19C, different from the embodiment shown in FIG. 18A to FIG. 18C, the energy storage device 500 may not include the power distribution apparatus 530, but is directly connected to the power sharing bus 310 through an output end of a DC-DC conversion apparatus 520 in the energy storage device 500. Similarly, the photovoltaic device 600 may not include the power distribution apparatus 630, but is directly connected to the power sharing bus 310 through an output end of a DC-DC conversion apparatus 620 in the photovoltaic device 600. In this way, power transmission is performed between the energy storage device 500 and the photovoltaic device 600 and the power distribution unit 421 of the charging device 400 through the power sharing bus, to flexibly adjust the output power of the load port 4214 of the power distribution unit 421, to meet required charging power of different electric vehicles.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power distribution apparatus, used in a charging device, wherein the charging device comprises a power module;
the power distribution apparatus comprises at least one power distribution unit, and the power distribution unit comprises at least one power supply port, a plurality of load ports, at least one connection port, and a switch matrix;
the power supply port is configured to connect to the power module, the load port is configured to connect to a load, and any two of the power supply port, the load port, and the connection port are connected through the switch matrix;
the switch matrix is configured to turn off or on a connection between any two of the power supply port, the load port, and the connection port; and
the at least one power distribution unit comprises a first power distribution unit, and one connection port of the first power distribution unit is configured to connect to a power distribution unit of another charging device, so that power transmission is performed between the first power distribution unit and the power distribution unit of the another charging device.

2. The power distribution apparatus according to claim 1, wherein the power module comprises an alternating current-to-direct current AC-DC conversion apparatus, a direct current-to-direct current DC-DC conversion apparatus, and a direct current bus;
the AC-DC conversion apparatus is connected to an input end of the DC-DC conversion apparatus through the direct current bus;
the AC-DC conversion apparatus is configured to convert an alternating current into a first direct current, and output the first direct current to the direct current bus;
the DC-DC conversion apparatus is configured to receive the first direct current through the direct current bus, convert the first direct current into a second direct current, and output the second direct current; and
the power supply port is configured to connect to an output end of the DC-DC conversion apparatus, to receive the second direct current output by the DC-DC conversion apparatus.

3. The power distribution apparatus according to claim 1 or 2, wherein the power distribution apparatus further comprises a power sharing bus;
the one connection port of the first power distribution unit is configured to connect to the power distribution unit of the another charging device through the power sharing bus; and
the power sharing bus is configured to connect at least one of a photovoltaic device and an energy storage device, to aggregate power output by at least one of the energy storage device and the photovoltaic device, the first power distribution unit, and the power distribution unit of the another charging device.

4. The power distribution apparatus according to any one of claims 1 to 3, wherein the at least one power distribution unit further comprises a second power distribution unit; and
another connection port of the first power distribution unit is connected to one connection port of the second power distribution unit, so that power transmission is performed between the first power distribution unit and the second power distribution unit.

5. The power distribution apparatus according to claim 4, wherein the one connection port of the first power distribution unit is connected to the another connection port of the first power distribution unit through the switch matrix; and
the switch matrix is further configured to turn off or on a connection between the one connection port of the first power distribution unit and the another connection port of the first power distribution unit.

6. The power distribution apparatus according to any one of claims 1 to 5, wherein the switch matrix of the power distribution unit comprises a first switch unit and a second switch unit; and
the power supply port is connected to the connection port through the first switch unit and the second switch unit, the power supply port is connected to the load port through the first switch unit, and the connection port is connected to the load port through the second switch unit.

7. The power distribution apparatus according to claim 6, wherein the switch matrix of the power distribution unit further comprises a third switch unit; and
two of a plurality of power supply ports of the power distribution unit are connected through the third switch unit, and/or two of a plurality of connection ports of the power distribution unit are connected through the third switch unit.

8. A charging device, comprising a power module and a power distribution apparatus, wherein
the power distribution apparatus comprises at least one power distribution unit, and the power distribution unit comprises at least one power supply port, a plurality of load ports, at least one connection port, and a switch matrix;
the power supply port is connected to the power module, the load port is configured to connect to a load, and any two of the power supply port, the load port, and the connection port are connected through the switch matrix;
the switch matrix is configured to turn off or on a connection between any two of the power supply port, the load port, and the connection port; and
the at least one power distribution unit comprises a first power distribution unit, and one connection port of the first power distribution unit is configured to connect to a power distribution unit of another charging device, so that power transmission is performed between the first power distribution unit and the power distribution unit of the another charging device.

9. The charging device according to claim 8, wherein the power module comprises an alternating current-to-direct current AC-DC conversion apparatus, a direct current-to-direct current DC-DC conversion apparatus, and a direct current bus;
the AC-DC conversion apparatus is connected to an input end of the DC-DC conversion apparatus through the direct current bus, and an output end of the DC-DC conversion apparatus is connected to the power supply port;
the AC-DC conversion apparatus is configured to convert an alternating current into a first direct current, and output the first direct current to the direct current bus; and
the DC-DC conversion apparatus is configured to receive the first direct current through the direct current bus, convert the first direct current into a second direct current, and output the second direct current to the power supply port.

10. An energy storage device, comprising a battery pack, a direct current-to-direct current DC-DC conversion apparatus, and a power distribution apparatus, wherein
the power distribution apparatus comprises at least one power distribution unit, and the power distribution unit comprises at least one power supply port, a plurality of load ports, at least one connection port, and a switch matrix;
the battery pack is connected to the power supply port through the DC-DC conversion apparatus, the load port is configured to connect to a load, and any two of the power supply port, the load port, and the connection port are connected through the switch matrix;
the DC-DC conversion apparatus is configured to perform power conversion on a direct current output by the battery pack, and then output the direct current to the power supply port; or perform power conversion on a direct current output by the power supply port, and then output the direct current to the battery pack;
the switch matrix is configured to turn off or on a connection between any two of the power supply port, the load port, and the connection port; and
the at least one power distribution unit comprises a first power distribution unit, and one connection port of the first power distribution unit is configured to connect to a power distribution unit of a charging device, so that power transmission is performed between the first power distribution unit and the power distribution unit of the charging device.

11. A charging system, comprising a plurality of charging devices, wherein
the charging device comprises a power module and a power distribution apparatus, the power distribution apparatus comprises at least one power distribution unit, and the power distribution unit comprises at least one power supply port, a plurality of load ports, at least one connection port, and a switch matrix;
the power supply port is connected to the power module, the load port is configured to connect to a load, and any two of the power supply port, the load port, and the connection port are connected through the switch matrix;
the switch matrix is configured to turn off or on a connection between any two of the power supply port, the load port, and the connection port; and
at least one power distribution unit of each charging device comprises a first power distribution unit, and one connection port of a first power distribution unit of one charging device is connected to one connection port of a first power distribution unit of another charging device, so that power transmission is performed between the first power distribution unit of the one charging device and the first power distribution unit of the another charging device.

12. The charging system according to claim 11, wherein the power module comprises an alternating current-to-direct current AC-DC conversion apparatus, a direct current-to-direct current DC-DC conversion apparatus, and a direct current bus;
the AC-DC conversion apparatus is connected to an input end of the DC-DC conversion apparatus through the direct current bus, and an output end of the DC-DC conversion apparatus is connected to the power supply port;
the AC-DC conversion apparatus is configured to convert an alternating current into a first direct current, and output the first direct current to the direct current bus; and
the DC-DC conversion apparatus is configured to receive the first direct current through the direct current bus, convert the first direct current into a second direct current, and output the second direct current to the power supply port.

13. The charging system according to claim 11 or 12, wherein the charging system further comprises at least one of an energy storage device and a photovoltaic device, and a power sharing bus;
at least one of the energy storage device and the photovoltaic device, and one connection port of each power distribution unit of each charging device are connected to the power sharing bus; and
the power sharing bus is configured to aggregate power output by at least one of the energy storage device and the photovoltaic device, and each power distribution unit of each charging device.
